# EUROPEAN PATENT APPLICATION

(11) **EP 4 231 405 A1**
(43) Date of publication of application: **23.08.2023**
(21) Application number: 23157242.1
(22) Date of filing: 17.02.2023
(51) Int. Cl.: H01M 10/0565, H01M 10/36

(54) **BIODEGRADABLE ELECTROCHEMICAL DEVICE**

(30) Priority: 18.02.2022 US 202217651709
(71) Applicant: Xerox Corporation, Webster, NY 14580 (US); National Research Council of Canada, Ottawa, Ontario K1A 0R6 (CA)
(72) Inventor: CHOPRA, Naveen, Oakville, L6H 5W4 (CA); HU, Nan-Xing, Oakville, L6H 7V3 (CA); MCGUIRE, Gregory, Oakville, L6M 5J6 (CA); BLACK, Robert, Waterloo, N2L 6P3 (CA); LAFORGUE, Alexis, Montreal, H2H 2C1 (CA); LAM, Edmond, Montreal, H4C 2P2 (CA); LEUNG, Chi Woon, LaSalle, H8N 0G2 (CA); LIU, Yali, Pointe Claire, H9S 5A4 (CA); REGNIER, Sophie, Montreal, H2S 2P2 (CA); MOKRINI, Asmae, Montreal, H4A 2V1 (CA); CHAPLEAU, Nathalie, Montreal, H2G 1S6 (CA); DOVIJARSKI, Aleksa, Ottawa, K1A 0R6 (CA)
(74) Representative: Grünecker Patent- und Rechtsanwälte PartG mbB

(57) **Abstract**

A biodegradable solid aqueous electrolyte composition, an electrochemical device incorporating the electrolyte composition, and methods for the same are provided. The electrolyte composition may include a rubber-like hydrogel including a copolymer and a salt. The copolymer may include at least two polycaprolactone chains coupled with a polymeric center block. The polymeric center block may include polyvinyl alcohol. The hydrogel may be biodegradable. The electrochemical device may include an anode, a cathode, and the electrolyte composition disposed between the anode and the cathode.

## Description

### TECHNICAL FIELD

The presently disclosed embodiments or implementations are directed to biodegradable electrochemical devices, solid aqueous electrolytes thereof, and methods for fabricating or synthesizing the same.

### BACKGROUND

The number of batteries being produced in the world is continuously increasing as a consequence of the growing need for portable and remote power sources. Particularly, a number of new technologies require batteries to power embedded electronics. For example, embedded electronics, such as portable and wearable electronics, Internet of Things (IoT) devices, patient healthcare monitoring, structural monitoring, environmental monitoring, smart packaging, or the like, rely on batteries for power. While conventional batteries may be partially recycled, there are currently no commercially available batteries that are environmentally friendly or biodegradable. As such, an increase in the manufacture and use of conventional batteries results in a corresponding increase in toxic and harmful waste in the environment if not properly disposed of or recycled. In view of the foregoing, there is a need to develop biodegradable batteries; especially for applications that utilize disposable batteries for a limited time before being discarded.

Further, to meet the demand for flexible, low-cost, medium or low performance batteries, all-printed batteries have been developed, that are commercially available as single-use disposable batteries. However, none of these all-printed batteries are biodegradable.

It is generally accepted that one of the greatest challenges to producing biodegradable batteries is the development of a biodegradable polymer electrolyte, which is the main polymer-based component of an all-printed battery. Moreover, the development of such a biodegradable polymer electrolyte that can also be printed using existing printing technologies is an additional challenge.

Conventional biodegradable polymer electrolytes may often include a combination of a biodegradable polymer and a conductive salt. To obtain the biodegradable polymer electrolyte, the biodegradable polymer and the conductive salt are dissolved in a solvent, and then the solvent is subsequently evaporated at a relatively slow rate to produce a solid polymer electrolyte film. These conventional biodegradable polymer electrolytes often suffer from low ionic conductivity (e.g., less than about 10⁻⁵ S/cm at RT) at ambient temperature due to the low mobility of the ions in the biodegradable polymer. Sufficient conductivity, however, may be achieved when the polymer electrolyte is heated to a temperature sufficient (i.e., an operational temperature) to allow polymer chain mobility, thereby allowing the ions to move more freely through the polymer electrolyte structure. Sufficient conductivity may also be achieved by incorporating additives that suppress the crystallinity of the polymer electrolyte, thereby decreasing the operational temperature thereof. As such, biodegradable polymer electrolytes that may be operated with sufficient conductivity at room temperature is limited.

In addition to the foregoing drawbacks, conventional biodegradable polymer electrolytes also suffer from lengthy manufacturing processes due to the time required to evaporate the solvent during manufacture. For example, several hours of evaporation aided by vacuum and/or temperature are often required to evaporate the solvent to prepare the conventional biodegradable polymer electrolytes, thereby limiting the compatibility of conventional biodegradable polymer electrolytes with high-throughput printing processes where successive layers must be printed on top of each other in a matter of minutes.

What is needed, then, are printable, biodegradable electrochemical devices, solid aqueous electrolytes thereof, and methods for synthesizing and fabricating the same.

### SUMMARY

The following presents a simplified summary in order to provide a basic understanding of some aspects of one or more embodiments of the present teachings. This summary is not an extensive overview, nor is it intended to identify key or critical elements of the present teachings, nor to delineate the scope of the disclosure. Rather, its primary purpose is merely to present one or more concepts in simplified form as a prelude to the detailed description presented later.

The present disclosure may provide an electrolyte composition. The electrolyte composition may include a rubber-like hydrogel including a copolymer and a salt. The copolymer may include at least two polycaprolactone chains attached to a polymeric center block. The polymeric center block may include polyvinyl alcohol. The hydrogel may be biodegradable.

In some examples, the polyvinyl alcohol may include a degree of hydrolysis of less than about 80%.

In some examples, the polyvinyl alcohol may include a degree of hydrolysis of from about 30% to less than about 80%.

In some examples, the polyvinyl alcohol may include a degree of hydrolysis of from about 60% to less than about 80%.

In some examples, the polyvinyl alcohol may include a degree of hydrolysis of from about 60% to about 75%.

In some examples, the polyvinyl alcohol may include a degree of hydrolysis of about 75%.

In some examples, the copolymer may include a mole ratio of caprolactone to polyvinyl alcohol of from about 0.2:1 to about 1:1.

In some examples, the copolymer may include a mole ratio of caprolactone to polyvinyl alcohol of from about 0.25:1 to about 0.75:1.

In some examples, the copolymer may include a mole ratio of caprolactone to polyvinyl alcohol of from about 0.3:1 to about 0.7:1.

In some examples, the polyvinyl alcohol may include a degree of hydrolysis of less than about 80%, and wherein the copolymer may include a mole ratio of caprolactone to polyvinyl alcohol of from about 0.2:1 to about 1:1. The polyvinyl alcohol may include a degree of hydrolysis of from about 30% to less than 80%. The copolymer may include a mole ratio of caprolactone to polyvinyl alcohol of from about 0.25:1 to about 0.75:1.

In some examples, the copolymer may include caprolactone in an amount of from about 5 wt% to about 20 wt%.

In some examples, the copolymer may include caprolactone in an amount of from about 8 wt% to about 20 wt%.

The present disclosure may provide an electrochemical device. The electrochemical device may include an anode, a cathode, and an electrolyte composition disposed between the anode and the cathode. The electrolyte composition may include a rubber-like hydrogel including a copolymer and a salt. The copolymer may include at least two polycaprolactone chains attached to a polymeric center block. The polymeric center block may include polyvinyl alcohol. The hydrogel may be biodegradable.

In some examples, the polyvinyl alcohol may include a degree of hydrolysis of less than about 80%.

In some examples, the polyvinyl alcohol may include a degree of hydrolysis of from about 60% to less than about 80%.

In some examples, the copolymer may include a mole ratio of caprolactone to polyvinyl alcohol of from about 0.2:1 to about 1:1.

In some examples, the copolymer may include a mole ratio of caprolactone to polyvinyl alcohol of from about 0.25:1 to about 0.75:1.

In some examples, the polyvinyl alcohol may include a degree of hydrolysis of less than about 80%, and the copolymer may include a mole ratio of caprolactone to polyvinyl alcohol of from about 0.2: 1 to about 1:1.

### BRIEF DESCRIPTION OF THE DRAWINGS

The accompanying drawings, which are incorporated in and constitute a part of this specification, illustrate embodiments of the present teachings. These and/or other aspects and advantages in the embodiments of the disclosure will become apparent and more readily appreciated from the following description of the various embodiments, taken in conjunction with the accompanying drawings of which:
Figure 1 illustrates an exploded view of an exemplary biodegradable electrochemical device in a side-by-side configuration, according to one or more embodiments disclosed.
Figure 2 illustrates an exploded view of another exemplary biodegradable electrochemical device in a stacked configuration, according to one or more embodiments disclosed.
Figure 3 illustrates a ¹H NMR spectrum of the PCL-PEG-PCL macromonomer diol after Step 1 of the synthesis scheme shown in Scheme 1
Figure 4 illustrates a ¹H NMR spectra of PCL-PEG-PCL macromonomer diacrylate after Step 2 of the synthesis scheme shown in Scheme 1.
Figure 5A illustrates a stress vs. strain curve for a PCL-PEG-PCL-based solid aqueous electrolyte produced from a PCL-PEG-PCL macromonomer having a block chain length of 239-20000-239.
Figure 5B illustrates the Young's modulus of the PCL-PEG-PCL-based solid aqueous electrolyte of Figure 5A for five different measurements across various concentrations of NH₄Cl and ZnCl₂.
Figure 6 illustrates a plot of capacity (mAh/cm²) vs. cell voltage (V) for full MnO₂/Zn electrochemical cells containing a PCL-PEG-PCL-based solid aqueous electrolyte and discharged at 0.01 mA/cm² after resting for 10 hours prior to discharge.
Figure 7 illustrates a representative Nyquist Plot of Re(Z) vs. -Im(Z) monitoring impedance changes during cell discharge of a MnO₂/Zn electrochemical cell containing a PCL-PEG-PCL-based solid aqueous electrolyte.
Figure 8 illustrates a plot of cell voltage (V) vs. time (hr) comparing open circuit voltage (OCV) stability of a MnO₂/Zn electrochemical cell containing a PCL-PEG-PCL-based solid aqueous electrolyte to a cell containing a liquid aqueous solution electrolyte.
Figure 9 illustrates a plot of capacity (mAh/cm²) vs. cell voltage (V) comparing discharge performance of a MnO₂/Zn electrochemical cell containing a PCL-PEG-PCL-based solid aqueous electrolyte to a cell containing a liquid aqueous solution electrolyte.
Figure 10 illustrates the respective viscosity of the Zn anode paste and the MnO₂ paste prepared in Example 7.

### DETAILED DESCRIPTION

The following description of various typical aspect(s) is merely exemplary in nature and is in no way intended to limit the disclosure, its application, or uses.

As used throughout, ranges are used as shorthand for describing each and every value that is within the range. Any value within the range may be selected as the terminus of the range. In addition, all references cited herein are hereby incorporated by reference in their entireties. In the event of a conflict in a definition in the present disclosure and that of a cited reference, the present disclosure controls.

Unless otherwise specified, all percentages and amounts expressed herein and elsewhere in the specification should be understood to refer to percentages by weight. The amounts given are based on the active weight of the material.

Additionally, all numerical values are "about" or "approximately" the indicated value, and take into account experimental error and variations that would be expected by a person having ordinary skill in the art. It should be appreciated that all numerical values and ranges disclosed herein are approximate values and ranges, whether "about" is used in conjunction therewith. It should also be appreciated that the term "about," as used herein, in conjunction with a numeral refers to a value that may be ± 0.01% (inclusive), ± 0.1% (inclusive), ± 0.5% (inclusive), ± 1% (inclusive) of that numeral, ± 2% (inclusive) of that numeral, ± 3% (inclusive) of that numeral, ± 5% (inclusive) of that numeral, ± 10% (inclusive) of that numeral, or ± 15% (inclusive) of that numeral. It should further be appreciated that when a numerical range is disclosed herein, any numerical value falling within the range is also specifically disclosed.

As used herein, the term "or" is an inclusive operator, and is equivalent to the term "and/or," unless the context clearly dictates otherwise. The term "based on" is not exclusive and allows for being based on additional factors not described, unless the context clearly dictates otherwise. In the specification, the recitation of "at least one of A, B, and C," includes embodiments containing A, B, or C, multiple examples of A, B, or C, or combinations of A/B, A/C, B/C, A/B/B/ B/B/C, A/B/C, etc. In addition, throughout the specification, the meaning of "a," "an," and "the" include plural references. The meaning of "in" includes "in" and "on."

Reference will now be made in detail to exemplary embodiments of the present teachings, examples of which are illustrated in the accompanying drawings. Wherever possible, the same reference numbers will be used throughout the drawings to refer to the same, similar, or like parts.

A biodegradable electrochemical device is disclosed herein. As used herein, the term "biodegradable" may refer to a material, component, substance, device, or the like, capable of or configured to be decomposed by living organisms, particularly microorganisms in a landfill within a reasonable amount of time. The material, component, substance, device, or the like may be decomposed into water, naturally occurring gases like carbon dioxide and methane, biomass, or combinations thereof. As used herein, the expression "biodegradable electrochemical device" or "biodegradable device" may refer to an electrochemical device or a device, respectively, where at least one or more components thereof is biodegradable. In some instances, a majority or substantial number of the components of the biodegradable electrochemical device or the biodegradable device are biodegradable. In other instances, all of the polymer components of the biodegradable electrochemical device or the biodegradable device are biodegradable. For example, the polymers and/or other organic-based components of the electrochemical device are biodegradable while the inorganic materials of the electrochemical device disclosed herein, including the metals and/or metal oxides, may not be biodegradable. It should be appreciated that if all polymer and/or organic-based components of an electrochemical device are biodegradable, it is generally accepted that the complete electrochemical device is considered biodegradable. As used herein, the term or expression "electrochemical device" may refer to a device that converts electricity into chemical reactions and/or vice-versa. Illustrative electrochemical devices may be or include, but are not limited to, batteries, dye-sensitized solar cells, electrochemical sensors, electrochromic glasses, fuel cells, electrolysers, or the like.

As used herein, the term or expression "environmentally friendly electrochemical device" or "environmentally friendly device" may refer to an electrochemical device or device, respectively, that exhibits minimal, reduced, or no toxicity to the ecosystems or the environment in general. In at least one embodiment, the electrochemical devices and/or components thereof disclosed herein are environmentally friendly.

In at least one embodiment, the biodegradable electrochemical device disclosed herein may include an anode, a cathode (i.e., a current collector and/or an active layer), and one or more electrolyte compositions (e.g., a biodegradable solid aqueous electrolyte composition). In another embodiment, the biodegradable electrochemical device may further include one or more substrates, one or more seals, or combinations thereof.

The biodegradable electrochemical devices disclosed herein may be flexible. As used herein, the term "flexible" may refer to a material, device, or components thereof that is capable of being bent around a predetermined radius of curvature without breaking and/or cracking. The biodegradable electrochemical devices and/or the components thereof disclosed herein may be bent around a radius of curvature of about 30 cm or less, about 20 cm or less, about 10 cm or less, about 5 cm or less without breaking or cracking.

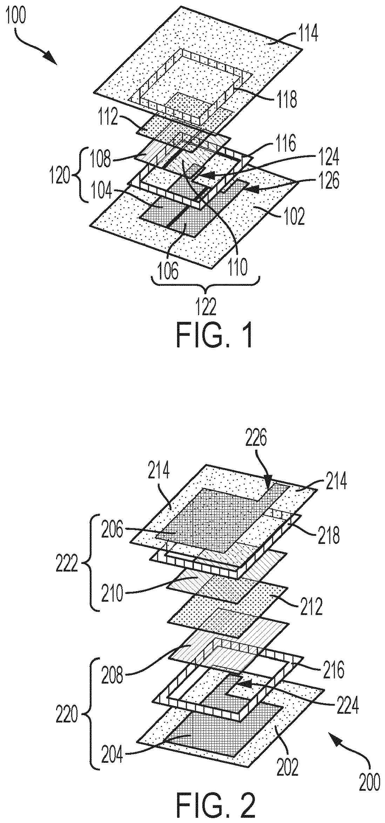

Figure 1 illustrates an exploded view of an exemplary biodegradable electrochemical device 100 in a side-by-side or coplanar configuration, according to one or more embodiments. As illustrated in Figure 1, the biodegradable electrochemical device 100 may include a first substrate 102, first and second current collectors 104, 106 disposed adjacent to or on top of the first substrate 102, an anode active layer 108 disposed adjacent to or on top of the first current collector 104, a cathode active layer 110 disposed adjacent to or on top of the second current collector 106, an electrolyte layer 112 disposed adjacent to or on top of the anode active layer 108 and the cathode active layer 110, and a second substrate 114 disposed adjacent to or on top of the electrolyte layer 112. It should be appreciated that the first current collector 104 and the anode active layer 108 may be collectively referred to herein as an anode 120 of the biodegradable electrochemical device 100. It should further be appreciated that the second current collector 106 and the cathode active layer 110 may be collectively referred to herein as a cathode 122 of the biodegradable electrochemical device 100. As illustrated in Figure 1, the anode 120 and the cathode 122 of the biodegradable electrochemical device 100 may be coplanar such that the anode 120 and the cathode 122 are arranged along the same X-Y plane.

In at least one embodiment, the biodegradable electrochemical device 100 may include one or more seals (two are shown 116, 118) capable of or configured to seal or hermetically seal the current collectors 104, 106, the anode active layer 108, the cathode active layer 110, and the electrolyte layer 112 between the first and second substrates 102, 114 of the biodegradable electrochemical device 100. For example, as illustrated in Figure 1, the biodegradable electrical device 100 may include two seals 116, 118 interposed between the first and second substrates 102, 114 and about the current collectors 104, 106, the anode active layer 108, the cathode active layer 110, and the electrolyte layer 112 to seal or hermetically seal the biodegradable electrochemical device 100. In another embodiment, the biodegradable electrochemical device 100 may be free or substantially free of seals 116, 118. For example, the substrates 102, 114 may be melted or bonded with one another to seal the biodegradable electrochemical device 100.

Figure 2 illustrates an exploded view of another exemplary biodegradable electrochemical device 200 in a stacked configuration, according to one or more embodiments. As illustrated in Figure 2, the biodegradable electrochemical device 200 may include a first substrate 202, a first current collectors 204 disposed adjacent to or on top of the first substrate 102, an anode active layer 208 disposed adjacent to or on top of the first current collector 204, an electrolyte layer 212 disposed adjacent to or on top of the anode 108, a cathode active layer 210 disposed adjacent to or on top of the electrolyte layer 212, a second current collector 206 disposed adjacent to or on top of the cathode active layer 210, and a second substrate 214 disposed adjacent to or on top of the second current collector 206. It should be appreciated that the first current collector 204 and the anode active layer 208 may be collectively referred to herein as an anode 220 of the biodegradable electrochemical device 200. It should further be appreciated that the second current collector 206 and the cathode active layer 210 may be collectively referred to herein as a cathode 222 of the biodegradable electrochemical device 200. As illustrated in Figure 2, the anode 220 and the cathode 222 of the biodegradable electrochemical device 200 may be arranged in a stacked configuration or geometry such that the anode 220 and the cathode 222 are disposed on top of or below one another.

In at least one embodiment, the biodegradable electrochemical device 200 may include one or more seals (two are shown 216, 218) capable of or configured to hermetically seal the current collectors 204, 206, the anode active layer 208, the cathode active layer 210, and the electrolyte layer 212 between the first and second substrates 202, 214 of the biodegradable electrochemical device 200. For example, as illustrated in Figure 2, the biodegradable electrical device 200 may include two seals 216, 218 interposed between the first and second substrates 202, 214 and about the current collectors 204, 206, the anode active layer 208, the cathode active layer 210, and the electrolyte layer 212 to hermetically seal the biodegradable electrochemical device 200. In another embodiment, the biodegradable electrochemical device 200 may be free or substantially free of seals 216, 218. For example, the substrates 202, 214 may be melted or bonded with one another to seal the biodegradable electrochemical device 200.

As illustrated in Figures 1 and 2, each of the current collectors 104, 106, 204, 206 may include a respective tab 124, 126, 224, 226 that may extend outside the seals 116, 118, 216, 218 to thereby provide connectivity.

In at least one embodiment, any one or more of the substrates 102, 114, 202, 214 of the respective biodegradable electrochemical devices 100, 200 may be or include, but is not limited to, a biodegradable substrate. Illustrative biodegradable substrates may be or include, but are not limited to, one or more of polylactic acid (PLA), polylactic-co-glycolic acid (PLGA), silk-fibroin, chitosan, polycaprolactone (PCL), polyhydroxybutyrate (PHB), rice paper, cellulose, or combinations or composites thereof.

The biodegradable substrates of the respective biodegradable electrochemical devices 100, 200 may be stable at temperatures of from about 50°C to about 150°C. As used herein, the term "stable" or "stability" may refer to the ability of the substrate to resist dimensional changes and maintain structural integrity when exposed to temperature of from about 50°C to about 150°C. For example, the biodegradable substrates may be capable of or configured to maintain structural integrity with dimensional changes of less than about 20%, less than about 15%, or less than about 10% after exposure to temperatures of from about 50°C to about 150°C. In one example, each of the biodegradable substrates may be stable (e.g., dimensional changes less than 20%) at a temperature of from about 50°C, about 60°C, about 70°C, about 80°C, about 90°C, about 100°C, or about 110°C to about 120°C, about 130°C, about 140°C, or about 150°C. In another example, each of the biodegradable substrates may be stable at a temperature of at least 100°C, at least 105°C, at least 1 10°C, at least 115°C, at least 120°C, at least 125°C, at least 130°C, at least 135°C, at least 140°C, or at least 145°C. In at least one embodiment, the biodegradable substrates may be stable at temperatures of from about 50°C to about 150°C for a period of from about 5 min to about 60 min or greater. For example, the biodegradable substates may be stable at the aforementioned temperatures for a period of time of from about 5 min, about 10 min, about 20 min, or about 30 min to about 40 min, about 45 min, about 50 min, about 60 min, or greater.

In at least one embodiment, the biodegradable substrate is weldable, bondable, and/or permanently thermo-sealable without the use of an additional adhesive. For example, the biodegradable substrates of each of the substrates 102, 114, 202, 214 may be weldable and/or bondable with one another without the use of the respective seals 116, 118, 216, 218. Illustrative biodegradable substrates that may be weldable and/or bondable with one another may be or include, but are not limited to, thermoplastics, such as polylactic acid (PLA), polylactides modified with a nucleating agent to enhance crystallinity, such as polylactide modified with nucleating agent D (PLA-D) and polylactide modified with nucleating agent E (PLA-E), polybutylene succinate (PBS), polybutylene adipate terephthalate (PBAT), blends of PLA and polyhydroxybutyrate (PHB), PHB-based blends, or the like, or combinations thereof. As used herein, the term or expression "bondable," "weldable," and/or "permanently thermo-sealable" may refer to an ability of a material (e.g., substrate) to heat seal two surfaces with one another or permanently join two surfaces with one another via heating or melting.

The anode active layer 108, 208 of the respective biodegradable electrochemical devices 100, 200 may be or include, but is not limited to, one or more of zinc (Zn), lithium (Li), carbon (C), cadmium (Cd), nickel (Ni), magnesium (Mg), magnesium alloys, zinc alloys, or the like, or combinations and/or alloys thereof. In at least one embodiment, the anode active layer may include zinc oxide (ZnO) in a sufficient amount to regulate or control H₂ outgassing.

In at least one embodiment, the anode active layer 108, 208 of the respective biodegradable electrochemical devices 100, 200 may be prepared or fabricated from an anode paste. For example, the anode active layer may be prepared from a zinc anode paste. The anode paste may be prepared in an attritor mill. In at least one embodiment, stainless steel shot may be disposed in the attritor mill to facilitate the preparation of the anode paste. The anode paste may include one or more metal or metal alloys, one or more organic solvents, one or more styrene-butadiene rubber binders, or combinations thereof. In an exemplary embodiment, the anode paste may include one or more of ethylene glycol, a styrene-butadiene rubber binder, zinc oxide (ZnO), bismuth (III) oxide (Bi₂O₃), Zn dust, or combinations thereof. Illustrative organic solvents are known in the art and may be or include, but are not limited to, ethylene glycol, acetone, NMP, or the like, or combinations thereof. In at least one embodiment, any one or more biodegradable binders may be utilized in lieu of or in combination with a styrene-butadiene rubber binder.

The cathode active layer 110, 210 of the respective biodegradable electrochemical devices 100, 200 may be or include, but are not limited to, one or more of iron (Fe), iron (VI) oxide, mercury oxide (HgO), manganese (IV) oxide (MnO₂), carbon (C), carbon-containing cathodes, gold (Au), molybdenum (Mo), tungsten (W), molybdenum trioxide (MoOs), silver oxide (Ag₂O), copper (Cu), vanadium oxide (V₂O₅), nickel oxide (NiO), copper iodide (CuI₂), copper chloride (CuCl₂), or the like, or combinations and/or alloys thereof. In an exemplary embodiment, the cathode active layer 110, 210 may include manganese (IV) oxide. The carbon and/or carbon-containing cathode active layers may be utilized in aqueous metal-air batteries, such as zinc air batteries.

In at least one embodiment, the cathode active layer 110, 210 may include one or more additives capable of or configured to at least partially enhance the electronic conductivity of the cathode active layer 110, 210. Illustrative additives may be or include, but are not limited to, carbon particles, such as graphite, carbon nanotubes, carbon black, or the like, or combinations thereof.

In at least one embodiment, the cathode active layer 110, 210 of the respective biodegradable electrochemical devices 100, 200 may be prepared or fabricated from a cathode paste. For example, the cathode active layer 110, 210 may be prepared from a manganese (IV) oxide cathode paste. The cathode paste may be prepared in an attritor mill. In at least one embodiment, stainless steel shot may be disposed in the attritor mill to facilitate the preparation of the cathode paste. The cathode paste may include one or more metal or metal alloys, one or more organic solvents (e.g., ethylene glycol), one or more styrene-butadiene rubber binders, or combinations thereof. In an exemplary embodiment, the cathode paste may include one or more of ethylene glycol, a styrene-butadiene rubber binder, manganese (IV) oxide (MnO₂), graphite, or combinations thereof. Illustrative organic solvents are known in the art and may be or include, but are not limited to, ethylene glycol, acetone, NMP, or the like, or combinations thereof. In at least one embodiment, the one or more organic solvents may be replaced or used in combination with an aqueous solvent, such as water. For example, water may be utilized in combination with manganese (IV) oxide.

The anode and/or cathode paste may have a viscosity of from about 100 cP to about 1E6 cP. For example, the anode and/or cathode paste may have a viscosity of from greater than or equal to about 100 cP, greater than or equal to about 200 cP, greater than or equal to about 500 cP, greater than or equal to about 1,000 cP, greater than or equal to about 1,500 cP, greater than or equal to about 2,000 cP, greater than or equal to about 10,000 cP, greater than or equal to about 20,000 cP, greater than or equal to about 50,000 cP, greater than or equal to about 1E5 cP, greater than or equal to about 1.5E5 cP, greater than or equal to about 2E5 cP, greater than or equal to about 3E5 cP, greater than or equal to about 4E5 cP, greater than or equal to about 5E5 cP, greater than or equal to about 6E5 cP, greater than or equal to about 7E5 cP, greater than or equal to about 8E5 cP, or greater than or equal to about 9E5 cP. In another example, the anode and/or cathode paste may have a viscosity of less than or equal to about 200 cP, less than or equal to about 500 cP, less than or equal to about 1,000 cP, less than or equal to about 1,500 cP, less than or equal to about 2,000 cP, less than or equal to about 10,000 cP, less than or equal to about 20,000 cP, less than or equal to about 50,000 cP, less than or equal to about 1E5 cP, less than or equal to about 1.5E5 cP, less than or equal to about 2E5 cP, less than or equal to about 3E5 cP, less than or equal to about 4E5 cP, less than or equal to about 5E5 cP, less than or equal to about 6E5 cP, less than or equal to about 7E5 cP, less than or equal to about 8E5 cP, less than or equal to about 9E5 cP, or less than or equal to about 1E6 cP.

In at least one embodiment, each of the anodes 120, 220 and the cathodes 122, 222, or the active layers 108, 110, 208, 210 thereof may independently include a biodegradable binder. The function of the biodegradable binder is to anchor the particles of each of the respective layers together and provide adhesion to the substrate underneath, the respective layers being the anode current collector 104, 204, the cathode current collector 106, 206, the anode active layer 108, 208, the cathode active layer 110, 210, or combinations thereof. Illustrative biodegradable binders may be or include, but are not limited to, one or more of chitosan, polylactic-co-glycolic acid (PLGA), gelatin, xanthan gum, cellulose acetate butyrate (CAB), polyhydroxybutyrate (PHB), or a combinations thereof. In at least one embodiment, any one or more of the biodegradable polymers disclosed herein with regard to the electrolyte composition may also be utilized as the biodegradable binder of the anode 120, 220, the cathode 122, 222, components thereof, or any combination thereof. As further described herein, the one or more biodegradable polymers may be cross-linked. As such, the biodegradable binders utilized for the anode 120, 220, the cathode 122, 222, and/or the components thereof, may include the cross-linked biodegradable binders disclosed herein with regard to the electrolyte composition.

The electrolyte layer 112, 212 of each of the respective biodegradable electrochemical devices 100, 200 may be or include an electrolyte composition. The electrolyte composition may utilize biodegradable polymeric materials. The electrolyte composition may be a solid, aqueous electrolyte composition. The solid, aqueous electrolyte composition may be or include a hydrogel of or including a copolymer and a salt dispersed in and/or throughout the hydrogel. The copolymer may include at least two polycaprolactone (PCL) chains attached or coupled with a polymeric center block (CB). For example, the copolymer may be a block copolymer or a graft copolymer including at least two PCL chains coupled with the polymeric center block, such as PCL-CB-PCL. In another example, the copolymer may be a block copolymer or a graft copolymer including at least one or more of polylactic acid (PLA), polyglycolic acid (PGA), polyethylene imine (PEI) or combinations thereof, coupled with the polymeric center block.

The copolymer or the solids may be present in the hydrogel in an amount of from about 5 weight % or greater to 90 weight % or less, based on a total weight of the hydrogel (e.g., total weight of solvent, polymer, and salt). For example, the copolymer may be present in an amount of from about 5 weight % or greater, 10 weight % or greater, 15 weight % or greater, 20 weight % or greater, 25 weight % or greater, 30 weight % or greater, 35 weight % or greater, based on a total weight of the hydrogel. In another example, the copolymer may be present in an amount of from 90 weight % or less, 80 weight % or less, 70 weight % or less, or 60 weight % or less, based on a total weight of the hydrogel. In a preferred embodiment, the copolymer or the solids may be present in the hydrogel in an amount of from about 5 weight % to about 60 weight %, about 5 weight % to about 50 weight %, about 20 weight % to about 40 weight %, or about 30 weight %, based on a total weight of the hydrogel. In yet another preferred embodiment, the copolymer or the solids may be present in the hydrogel in an amount of from greater than 30 weight % to 60 weight %, based on a total weight of the hydrogel.

The copolymer may be present in the hydrogel in an amount sufficient to provide a continuous film or layer that is free or substantially free of bubbles. The copolymer may also be present in the hydrogel in an amount sufficient to provide a viscosity of from about 1,000 cP to about 100,000 cP. For example, the copolymer may be present in the hydrogel in an amount sufficient to provide a viscosity of from about 1,000 cP, about 5,000 cP, about 10,000 cP, or about 20,000 cP to about 30,000 cP, about 40,000 cP, about 50,000 cP, about 75,000 cP, about 90,000 cP, or about 100,000 cP.

The polymeric center block of the copolymer may be a biodegradable polymer, thereby improving or increasing biodegradability of the solid, aqueous electrolyte composition. The biodegradable polymer of the polymeric center block is preferably naturally occurring. The polymeric center block may be or include, or be derived from, a polymer, such as a biodegradable polymer, including at least two free hydroxyl groups available for reaction with ε-caprolactone. As further described herein, the polymer including the at least two free hydroxyl groups may be reacted with ε-caprolactone to form the copolymer. Illustrative polymers including at least two free hydroxyl groups that may be utilized include, but are not limited to, one or more of polyvinyl alcohol (PVA), a hydroxyl-bearing polysaccharide, a biodegradable polyester, a hydroxy fatty acid (e.g., castor oil), or the like, or combinations thereof. Illustrative hydroxyl-bearing polysaccharides may be or include, but are not limited to, starch, cellulose, carboxymethyl cellulose, methyl cellulose, hydroxyethyl cellulose, chitin, guar gum, xanthan gum, agar-agar, pullulan, amylose, alginic acid, dextran, or the like, or combinations thereof. Illustrative biodegradable polyesters may be or include, but are not limited to, polylactide, polyglycolic acid, polylactide-co-glycolic acid, polyitaconic acid, polybutylene succinate, or the like, or combinations thereof. In a preferred embodiment, the polymer center block may be or include one or more of polyvinyl alcohol (PVA), a hydroxyl-bearing polysaccharide, a biodegradable polyester, or a hydroxy fatty acid.

In at least one embodiment, the polymeric center block of the copolymer may not be a biodegradable polymer. For example, the polymeric center block of the copolymer may be or include, but is not limited to, polyethylene glycol (PEG), hydroxy-terminated polyesters, hydroxyl-terminated polyolefins, such as hydroxy-terminated polybutadiene, or the like, or combinations thereof.

The copolymer, including at least two polycaprolactone (PCL) chains bonded to the polymeric center block, may be a graft copolymer or a block copolymer. Whether the copolymer is a graft copolymer or a block copolymer may be at least partially determined by the number and/or placement of the at least two free hydroxyl groups of the polymeric center block. For example, reacting ε-caprolactone with polymeric center blocks having the hydroxyl groups on monomers along a length of the polymeric center block chain forms graft copolymers. In another example, reacting ε-caprolactone with polymeric center blocks having each of the hydroxyl groups at respective ends of the polymeric center blocks forms block copolymers. Illustrative block copolymers may be or include triblock copolymers, tetrablock copolymers, star block copolymers, or combinations thereof.

In an exemplary implementation, the solid, aqueous electrolyte composition may be or include a hydrogel of a copolymer, where the copolymer includes a biodegradable polymeric center block (CB) of polyvinyl alcohol (PVA) having at least two polycaprolactone (PCL) chains. Particularly, the copolymer is a PVA-graft-PCL copolymer. As further described herein, preparing the PVA-graft-PCL copolymer may include reacting ε-caprolactone with the PVA.

It should be appreciated that PVA is prepared through the polymerization of vinyl acetate to poly (vinyl acetate), and subsequent hydrolysis of the poly (vinyl acetate) to hydrolyze the acetate functional groups of the poly (vinyl acetate) to secondary hydroxyl groups to thereby prepare the PVA. In at least one implementation, the PVA utilized to prepare the PVA-graft-PCL copolymer has a degree of hydrolysis of about 80% or less. For example, the PVA may have a degree of hydrolysis of from about 30% to about 60% or less, about 65% or less, about 70% or less, about 75% or less, or about 80% or less. In another example, the PVA may have a degree of hydrolysis of from about 30%, about 40%, about 50%, or about 55% to about 60% or less, about 65% or less, about 70% or less, about 75% or less, or about 80% or less. As such, it should be appreciated that the PVA may have at least primary hydroxyl groups, secondary hydroxyl groups, and acetate functional groups. The degree of hydrolysis of the PVA may at least determine a solubility of the PVA. For example, a relatively lower degree of hydrolysis increases solubility due to the "open" or "unfolded" polymeric PVA chain, the greater amounts of the residual acetate groups, or combinations thereof. As further demonstrated below, the degree of hydrolysis of the PVA may at least partially determine one or more properties of the resulting solid, aqueous electrolyte composition. For example, the degree of hydrolysis of the PVA may at least partially determine a physical property of the solid, aqueous electrolyte composition or a component thereof, such as elasticity, brittleness, the level of grafting of the PCL to the PVA, or combinations thereof.

As discussed above, preparing the PVA-graft-PCL copolymer may include reacting ε-caprolactone with the PVA. The ε-caprolactone may react with the terminal or primary hydroxyl groups of the PVA. The ε-caprolactone may also react with the secondary hydroxyl groups of the PVA polymeric chain to thereby provide the PVA-PCL graft copolymer. In at least one implementation, the mole ratio of the ε-caprolactone (CL) to the PVA may be varied. The mole ratio of the CL:PVA may be from about 0.2:1 to about 1:1, about 0.2:1 to about 0.8: 1, about 0.25: 1 to about 0.75:1, about 0.3:1 to about 0.7:1, about 0.35:1 to about 0.65:1, or about 0.4:1 to about 0.6:1. The mole ratio of CL:PVA may be greater than or equal to 0.2:1 and less than or equal to 0.3:1, less than or equal to 0.4:1, less than or equal to 0.5:1, less than or equal to 0.6:1, less than or equal to 0.7:1, or less than or equal to 0.75:1. The mole ratio of the CL:PVA may be greater than or equal to 0.2:1, greater than or equal to 0.3:1, greater than or equal to 0.4:1, greater than or equal to 0.5:1, greater than or equal to 0.6:1, or greater than or equal to 0.7:1, and less than or equal to 0.75: 1. As further demonstrated below, the mole ratio of the CL:PVA may at least partially determine one or more properties of the resulting solid, aqueous electrolyte composition. For example, the mole ratio of the CL:PVA may at least partially determine a physical property of the solid, aqueous electrolyte composition or a component thereof, such as elasticity, brittleness, the level of grafting of the PCL to the PVA, or combinations thereof. In at least one implementation, the mole ratio may be at least partially determined by a molecular weight of the PVA. For example, utilizing relatively higher molecular weight (i.e., >30 kDa) PVA may increase the mole ratio of the CL:PVA sufficient to provide the rubber-like hydrogel. In another example, utilizing relatively lower molecular weight (<30 kDa) PVA may decrease the mole ratio of the CL:PVA sufficient to provide the rubber-like hydrogel.

As discussed above, the degree of hydrolysis of the PVA and/or the mole ratio of the CL:PVA may at least partially determine a physical property of the solid, aqueous electrolyte composition or a component thereof. For example, the degree of hydrolysis of the PVA and/or the mole ratio of the CL:PVA may be varied to provide the hydrogel with a rubber-like consistency or to provide a rubber-like hydrogel. As used herein, the term or expression "rubber-like" may refer to a material having unique properties of deformation (i.e., elongation or yield under stress) and elastic recovery. As used herein, the term or expression "rubber-like hydrogel" may refer to a hydrogel or a crosslinked hydrophilic polymer having unique properties of deformation and elastic recovery.

The PVA-graft-PCL copolymer may include the CL in an amount of from about 5 wt% to about 20 wt%, based on the total weight of the PVA-graft-PCL copolymer. For example, the CL may be present in the PVA-graft-PCL copolymer in an amount of from about 5 wt%, about 8 wt%, or about 10 wt% to about 12 wt%, about 15 wt%, about 18 wt%, or about 20 wt%, based on the total weight of the PVA-graft-PCL copolymer.

The PVA-graft-PCL copolymer of the electrolyte compositions disclosed herein may include various functional groups. Particularly, the PVA-graft-PCL copolymer may include acetate functional groups (e.g., the unreacted acetate functional groups from the partially hydrolyzed PVA), hydroxyl functional groups, acrylate functional groups, or combinations thereof. In at least one implementation, about 20% to about 70% of the functional groups of the PVA-graft-PCL copolymer may be acetate functional groups. For example, the PVA-graft-PCL copolymer of the electrolyte composition may retain from about 20% to about 70% acetate functional groups. The acetate functional groups may be present in an amount of from about 20%, about 25%, about 30%, or about 35% to about 50%, about 55%, about 60%, about 65%, or about 70%, based on the total amount of functional groups.

As discussed above, the electrolyte composition may be a solid, aqueous electrolyte composition including the hydrogel of the copolymer and the salt dispersed in the hydrogel. The salt of the hydrogel may be or include any suitable ionic salt known in the art. Illustrative ionic salts may be or include, but are not limited to, one or more of organic-based salts, inorganic-based salts, room temperature ionic liquids, deep eutectic solvent-based salts, or the like, or combinations or mixtures thereof. In a preferred embodiment, the salts are or include salts useable in zinc/manganese (IV) oxide (Zn/MnO₂) electrochemistry. Illustrative salts may be or include, but are not limited to, zinc chloride (ZnCl₂), ammonium chloride (NH₄Cl), sodium chloride (NaCl), phosphate-buffered saline (PBS), sodium sulfate (Na₂SO₄), zinc sulfate (ZnSO₄), manganese sulfate (MnSO₄), magnesium chloride (MgCl₂), calcium chloride (CaCl₂), ferric chloride (FeCl₃), lithium hexafluorophosphate (LiPF₆), potassium hydroxide (KOH), sodium hydroxide (NaOH), or the like, or combinations thereof. In a preferred embodiment, the salt of the electrolyte composition may be or include ammonium chloride (NH₄Cl), zinc chloride (ZnCl₂), or a combination or mixture thereof. In another embodiment, the salt may be or include alkali metal salts, such as sodium hydroxide (NaOH), ammonium hydroxide (NH₄OH), potassium hydroxide (KOH), or combinations or mixtures thereof.

The salt may be present in an amount capable of, configured to, or sufficient to provide ionic conductivity. For example, the salt may be present in the hydrogel in an amount or concentration of at least 0.1M, more preferably at least 0.5M, even more preferably at least 2M, even more preferably at least 4M. The salt may be present in the hydrogel at a concentration of 10M or less, more preferably 6M or less. In another example, the salt may be present in the hydrogel in an amount of from about 3M to about 10M, about 4M to about 10M, about 5M to about 9M, or about 6M to about 8M. In an exemplary implementation, the salts included ammonium chloride and zinc chloride, where ammonium chloride is present in an amount of from about 2.5M to about 3M, about 2.8M to about 2.9M, or about 2.89M, and where zinc chloride is present in an amount of from about 0.5M to 1.5M, about 0.8M to about 1.2M, or about 0.9M.

In at least one embodiment, the electrolyte composition may include one or more additives. The one or more additives may be or include, but are not limited to, biodegradable or environmentally friendly nanomaterials. The biodegradable nanomaterials may be capable of or configured to provide and/or improve structural strength of the electrolyte layer or the electrolyte composition thereof without sacrificing flexibility of the electrolyte layer or the electrolyte composition thereof. Illustrative biodegradable nanomaterials of the additives may be or include, but are not limited to, polysaccharide-based nanomaterials, inorganic nanomaterials, or the like, or combinations thereof. Illustrative polysaccharide-based nanomaterials may be or include, but are not limited to, one or more of cellulose nanocrystals, chitin nanocrystals, chitosan nanocrystals, starch nanocrystals or the like, or combinations or mixtures thereof. Illustrative inorganic nanomaterials may be or include, but are not limited to, one or more of silicon oxides (e.g., fumed silica), aluminum oxides, layered silicates or lime, or combinations or mixtures thereof. Illustrative layered silicates may be or include, but are not limited to, one or more of bentonite, kaolinite, dickite, nacrite, stapulgite, illite, halloysite, montmorillonite, hectorite, fluorohectorite, nontronite, beidellite, saponite, volkonskoite, magadiite, medmontite, kenyaite, sauconite, muscovite, vermiculite, mica, hydromica, phegite, brammalite, celadonite, or combinations or mixtures thereof.

The one or more additives may be present in an amount of from at least 0.1 weight %, based on a total weight of the hydrogel. For example, the one or more additive may be present in an amount of at least 0.1 weight %, at least 0.5 weight %, or at least 1 weight %, based on a total weight of the hydrogel. The one or more additives may also be present in an amount of 40 weight % or less, based on a total weight of the hydrogel. For example, the one or more additives may be present in an amount of 40 weight % or less, 20 weight % or less, or 10 weight % or less, based on a total weight of the hydrogel.

In at least one embodiment, the electrolyte composition may include an aqueous solvent. For example, the electrolyte composition may include water. In at least one embodiment, the electrolyte composition may include a co-solvent. For example, the electrolyte composition may include water and an additional solvent. Illustrative co-solvents may be or include, but are not limited to, one or more of ethylene glycol, propylene glycol, diethylene glycol, dipropylene glycol, or combinations thereof. The cosolvent may include water in an amount greater than about 20%, greater than about 30%, greater than about 40%, greater than about 50% to greater than about 60%, greater than about 70%, greater than about 80%, greater than about 85%, or greater than about 90%, by total weight or volume of the aqueous solvent of the electrolyte composition.

In at least one embodiment, the electrolyte composition includes the hydrogel of the copolymer and the salt dispersed in the hydrogel, a solvent (e.g., water or water and a co-solvent), one or more photoinitiators, the optional one or more additives, or combinations thereof. For example, the electrolyte composition includes the hydrogel of the copolymer, the salt dispersed in the hydrogel, the solvent, the one or more additives, or combinations or mixtures thereof. In at least one embodiment, the electrolyte composition consists of or consists essentially of the hydrogel of the copolymer, the salt dispersed in the hydrogel, and the solvent (e.g., water or water and a cosolvent). In another embodiment, the electrolyte composition consists of or consists essentially of the hydrogel of the copolymer, the salt dispersed in the hydrogel, the solvent, and the one or more additives. The solvent, which may be water or a combination of water and a cosolvent, may provide the balance of the hydrogel.

The solid, aqueous electrolyte composition may be produced according to Scheme (1):

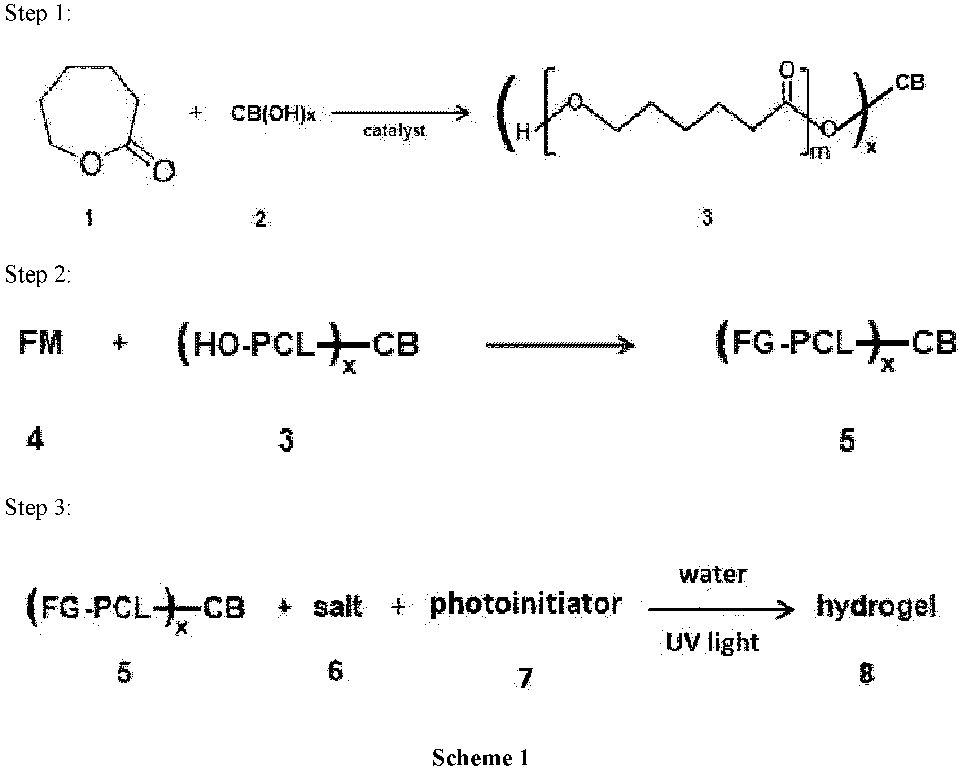

Step 1 of Scheme (1) may include ring-opening polymerization of ε-caprolactone **1** and a polymer center block (CB(OH)ₓ) **2** including at least two free hydroxyl groups in the presence of a catalyst (i.e., photoinitiator). Ring-opening polymerization of the ε-caprolactone **1** and a polymer center block (CB(OH)ₓ) **2** may produce a (PCL)ₓ-CB macromonomer **3,** where x may be an integer of 2 or more. It should be appreciated that any suitable ring-opening polymerization catalyst may be utilized in step 1. In at least one example, the catalyst may be or include a tin catalyst, such as tin 2-ethylhexanoate.

The ring-opening polymerization of step 1 may generally be carried out or conducted at an elevated temperature for a suitable period of time. In at least one embodiment, the ring-opening polymerization may be conducted at a temperature of from about 50°C to about 200°C, more preferably at a temperature of from about 100°C to about 150°C. The ring-opening polymerization may be conducted at a period of from about 5 hours to about 48 hours, more preferably about 24 hours.

The (PCL)ₓ-CB macromonomer **3** may be purified by generally known methods. For example, the (PCL)ₓ-CB macromonomer **3** may be purified by extraction, precipitation, and filtration. The purification may be repeated one or more times to provide a product having relatively greater purity. In at least one embodiment, the PCL chains of the macromonomer **3** have or include free hydroxyl groups. The free hydroxyl groups of the (PCL)ₓ-CB macromonomer **3** may be available for functionalization.

Step 2 of the Scheme (1) may include functionalization of the (PCL)ₓ-CB macromonomer **3** with a functionalization agent (FM) **4** to produce a functionalized macromonomer (FG-PCL)ₓ-CB **5.** Illustrative functionalizing agents (FM) may be or include, but are not limited to, acryloyl chloride, methacroyl chloride, methacrylic anhydride, maleate anhydride, or combinations or mixtures thereof. The functionalization agent (FM) may be capable of or configured to introduce, append, or otherwise add functional groups (FG) to the (PCL)ₓ-CB macromonomer **3** to produce the functionalized macromonomer (FG-PCL)ₓ-CB **5.** Illustrative functional groups may be or include, but are not limited to, one or more of an acrylate, a vinyl ether, an allyl ether, an alkene, an alkyne, a thiol, or combinations thereof. The functionalization of the (PCL)ₓ-CB macromonomer **3** to produce the functionalized macromonomer (FG-PCL)ₓ-CB **5** promotes the formation of a hydrogel when an aqueous solution of the functionalized macromonomer (FG-PCL)ₓ-CB **5** is crosslinked with radiant energy, such as ultraviolet light.

Functionalization of the (PCL)ₓ-CB macromonomer **3** with the functionalization agent (FM) **4** to produce the functionalized macromonomer (FG-PCL)ₓ-CB **5** may be performed or conducted in the presence of a base in a solvent. The base may be or include an amine, such as trimethylamine or triethylamine. The solvent may be or include a polar aprotic solvent, such as dichloromethane. Functionalization may be performed in an inert atmosphere. For example, the functionalization may be conducted under an inert gas, such as nitrogen, argon, or the like. The functionalization may be conducted under heating to facilitate the reaction. For example, the reaction may be conducted at a temperature of up to about 60°C. The functionalized macromonomer (FG-PCL)ₓ-CB **5** may be purified by generally known methods (e.g., extraction, precipitation, and filtration).

Step 3 of the Scheme (1) may include mixing, combining, or otherwise contacting the functionalized macromonomer (FG-PCL)ₓ-CB **5,** the salt **6,** and a photoinitiator **7** with one another in an aqueous solvent or medium to prepare an aqueous solution. Step 3 may also include irradiating the aqueous solution with radiant energy, such as ultraviolet (UV) light, to crosslink the aqueous solution and form the solid aqueous electrolyte in the form of a hydrogel **8.**

The aqueous solution prepared from contacting the functionalized macromonomer (FG-PCL)ₓ-CB **5,** the salt **6,** and the photoinitiator **7** with one another may be disposed on a substrate or a surface thereof prior to irradiating the aqueous solution with the radiant energy. For example, the aqueous solution may be coated, cast, or printed (e.g., via a printing process) on the substrate or the surface thereof to prepare or form a layer of the aqueous solution on the substrate or the surface thereof. In a preferred embodiment, a layer of the aqueous solution is printed on the substrate via a printing process or method to form the electrolyte layer 112, 212. As further described herein, the layer of the aqueous solution may be printed directly adjacent one or both of the anode active layer 108, 208 and/or the cathode active layer 110, 210 of the respective biodegradable electrochemical devices 100, 200 to form the respective electrolyte layers 112, 212. In at least one embodiment, the aqueous solution may include one or more ink additives to facilitate or aid in the printing process.

The photoinitiator **7** may be a UV-crosslinking photo initiator. The photoinitiator **7** may be water-soluble. Illustrative photoinitiators **7** may be or include, but are not limited to, lithium acyl phosphinate or lithium phenyl(2,4,6-trimethylbenzoyl) phosphinate (LAP), IRGACURE^{™} 2959, DAROCUR^{™} 1173, sodium 4-[2-(4-morpholino)benzoyl-2-dimethylamino]-butylbenzenesulfonate (MBS), monoacylphosphineoxide (MAPO) salts Na-TPO and Li-TPO, bisacylphosphine oxide salts Na-BAPO, Li-BAPO, thioxanthone derivatives, benzophenone derivatives, IRGACURE^{™} 754, PEG-modified BAPO, or combinations thereof. In a preferred embodiment, the photoinitiator **7** utilized is or includes lithium acyl phosphinate (LAP) as LAP is water-soluble, exhibits no cytotoxicity, and does not require an inert atmosphere.

Crosslinking the aqueous solution with the radiant energy may be conducted at room temperature. Crosslinking the aqueous solution with the radiant energy may also be conducted without an inert atmosphere. Crosslinking the aqueous solution may include exposing the aqueous solution to UV light at a sufficient and/or appropriate wavelength and power output. It should be appreciated that the wavelength of the UV light may at least partially depend on an activation wavelength of the photoinitiator **7.** In at least one embodiment, the activation wavelength of the photoinitiator **7** may be from about 250 nm to about 500 nm. It should further be appreciated that the power output of the UV light may at least partially determine a curing time of the aqueous solution. For example, increasing the power output of the UV light may decrease the curing time of the aqueous solution. Exposing the aqueous solution to UV light for a period of time of less than 60 minutes (min) may be required to form the hydrogel. In a preferred embodiment, the aqueous solution is exposed to the UV light for about 30 minutes or less, more preferably about 20 minutes or less, even more preferably about 10 minutes or less. In some embodiments, the aqueous solution is crosslinked in a period of time from about 10 milliseconds (ms) to about 100 ms. As such, the power output of the UV light may be varied to provide adequate, sufficient, or complete crosslinking of the aqueous solution in the desired period of time. The hydrogel produced by crosslinking the aqueous solution may be utilized "as is." For example, the hydrogel produced by crosslinking the aqueous solution may be utilized as the electrolyte layer 112, 212 of the respective biodegradable electrochemical devices 100, 200.

As previously discussed, the electrolyte layer 112, 212 of the respective biodegradable electrochemical devices 100, 200 may be or include the solid, aqueous electrolyte composition. The solid, aqueous electrolyte composition may have sufficient mechanical and electrochemical properties necessary for a commercial printed battery or a commercially useful printed battery. For example, the solid, aqueous electrolyte composition may have a Young's modulus or storage modulus of greater than about 0.10 Megapascals (MPa), greater than about 0.15 MPa, or greater than about 0.20 MPa, thereby providing the solid, aqueous electrolyte composition with sufficient strength while maintaining sufficient flexibility to prevent breakage under stress. The solid, aqueous electrolyte composition may have a Young's modulus of less than or equal to about 100 MPa, less than or equal to about 80 MPa, less than or equal to about 60 MPa, or less.

As used herein, the term or expression "Yield strength" may refer to a maximum stress a material can experience or receive before the material begins to deform permanently. The solid, aqueous electrolyte composition may have a Yield strength of from about 5 kPa or greater. For example, the solid, aqueous electrolyte composition may have a Yield strength of from about 5 kPa or greater, about 8 kPa or greater, about 10 kPa or greater, about 12 kPa or greater, about 15 kPa or greater, or about 20 kPa or greater.

The solid, aqueous electrolyte composition may be electrochemically stable for both the anode active layers 108, 208 and cathode active layers 110, 210 of the respective biodegradable electrochemical devices 100, 200. For example, the solid, aqueous electrolyte composition may maintain a stable open circuit voltage over an extended period of time, thereby demonstrating electrochemical stability towards both the anode active layers 108, 208 and cathode active layers 110, 210 of the respective biodegradable electrochemical devices 100, 200. In at least one embodiment, the solid, aqueous electrolyte composition may be electrochemically stable in contact with the electrode layers for at least one month, at least two months, at least three months, at least four months, at least five months, at least six months, at least one year, or more.

The solid, aqueous electrolyte composition disclosed herein may be utilized in any electrochemical device, such as an electrochemical cell, a battery, and/or the biodegradable electrochemical devices 100, 200 disclosed herein. In a preferred embodiment, the solid, aqueous electrolyte composition may be utilized in a battery including a Zn anode active layer and a MnO₂ cathode active layer.

The current collectors 104, 106, 204, 206 of the respective biodegradable electrochemical devices 100, 200 may be capable of or configured to receive, conduct, and deliver electricity. Illustrative current collectors 104, 106, 204, 206 may be or include, but are not limited to, silver, such as silver microparticles and silver nanoparticles, carbon, such as carbon black, graphite, carbon fibers, carbon nanoparticles, such as carbon nanotubes, graphene, reduced graphene oxide (RGO), or the like, or any combination thereof.

### METHODS

Embodiments of the present disclosure may provide methods for fabricating an electrochemical device, such as the biodegradable electrochemical devices 100, 200 disclosed herein. The method may include providing a biodegradable substrate. The method may also include depositing an electrode and/or electrode composition adjacent or on the biodegradable substrate. Depositing the electrode may include depositing and drying a current collector of the electrode, and depositing and drying an active layer (i.e., anode or cathode material) adjacent or on the current collector. The method may also include drying the electrode and/or electrode composition. The electrode composition may be dried thermally (e.g., heating). The method may also include depositing a biodegradable, radiatively curable electrolyte composition on or adjacent the electrode composition. The method may further include radiatively curing the biodegradable radiatively curable electrolyte composition. The biodegradable radiatively curable electrolyte composition may be radiatively cured before or subsequent to drying the electrode composition. The biodegradable substrate may be thermally compatible with the optional thermal drying. For example, the biodegradable substrate may be dimensionally stable (e.g., no buckling and/or curling) when thermally drying. The method may include depositing a second electrode and/or electrode composition on or adjacent the biodegradable, radiatively curable electrolyte composition. In at least one embodiment, each of the first and second electrode compositions is a metal foil composition. The metal foil composition of the first electrode may be different from the metal foil composition of the second electrode.

In at least one embodiment, the electrochemical device, all of the components thereof, or substantially all of the components thereof are fabricated via a printing process. The printing process may include depositing, stamping, spraying, sputtering, jetting, coating, layering, or the like. For example, the one or more current collectors, the one or more electrode compositions, the biodegradable, radiatively curable electrolyte composition, or combinations thereof may be deposited via the printing process. Illustrative printing processes may be or include, but are not limited to, one or more of screen printing, inkjet printing, flexography printing (e.g. stamps), gravure printing, off-set printing, airbrushing, aerosol printing, typesetting, roll-to-roll methods, or the like, or combinations thereof. In a preferred embodiment, the components of the electrochemical device are printed via screen printing.

In at least one embodiment, radiatively curing the biodegradable radiatively curable electrolyte composition includes exposing the electrolyte composition to a radiant energy. The radiant energy may be ultraviolet light. Exposing the biodegradable radiatively curable electrolyte composition to the radiant energy may at least partially crosslink the biodegradable radiatively curable electrolyte composition, thereby forming a hydrogel. The biodegradable radiatively curable electrolyte composition may be radiatively cured at room temperature. In at least one embodiment, the biodegradable radiatively curable electrolyte composition is cured at an inert atmosphere. For example, the biodegradable radiatively curable electrolyte composition may be cured under nitrogen, argon, or the like. In another embodiment, the biodegradable radiatively curable electrolyte composition may be cured in a non-inert atmosphere.

In at least one embodiment, the biodegradable radiatively curable electrolyte composition may be radiatively cured in a period of time from about 5 ms to about 100 ms. For example, the biodegradable radiatively curable electrolyte composition may be radiatively cured in a period of time from about 5 ms, about about 10 ms, about 15 ms, about 20 ms, about 30 ms, about 40 ms, or about 50 ms to about 60 ms, about 70 ms, about 80 ms, about 85 ms, about 90 ms, about 95 ms, or about 100 ms. The period of time sufficient to radiatively cure the biodegradable radiatively curable electrolyte composition may be at least partially determined by a power output of the UV light.

In at least one embodiment, the method may also include depositing an adhesive, such as a biodegradable adhesive, to thereby provide the seals 116, 118, 216, 218 of the respective biodegradable electrochemical devices 100, 200. For example, the method may include depositing a layer of the adhesive to couple the substrates or part of the substrates (e.g., area around the tabs 124, 126, 224, 226), of the electrochemical device with one another. In some embodiments, the adhesive may be a hot-melt adhesive. In another embodiment, the electrochemical device may be free or substantially free from any adhesive. For example, the biodegradable substrate may be weldable and/or heat-sealable without the use of an additional adhesive.

In at least one embodiment, the biodegradable substrate may be a continuous web, or may be supported by a continuous web. As used herein, the term "web" may refer to a moving supporting surface, such as a conveyor belt. In at least one example, a plurality of electrochemical devices are simultaneously printed as independent or linked elements or components on the continuous web. For example, respective components of the plurality of electrochemical devices may be simultaneously printed as independent or linked components on the continuous web as an array in a parallel process. As used herein, the term or expression "linked elements" or "linked components" may refer to elements or components, respectively, of the electrochemical device that are physically touching, overlapping, or otherwise contacting one another. Illustrative linked elements may be or include an active layer (e.g., cathode active layer or anode active layer) disposed adjacent to or on top of a current collector layer, a current collector layer and a copper tape tab, or an electrolyte layer on top of an active cathode/anode layer.

Embodiments of the present disclosure may provide methods for fabricating, producing, or otherwise synthesizing a solid aqueous electrolyte. The method may include dissolving a salt and a functionalized copolymer in an aqueous solution to prepare an aqueous mixture. The functionalized copolymer may include at least two polycaprolactone (PCL) chains attached or coupled with a polymeric center block. The functionalized copolymer may be functionalized with any suitable functional group that facilitates or promotes the formation of a hydrogel when the aqueous mixture is exposed or cured with radiant energy, such as UV light. The method may also include forming a layer of the aqueous mixture on a surface. The surface may be an anode and/or a cathode of a battery. The method may further include crosslinking the aqueous solution with the radiant energy in the form of UV light to form the solid aqueous electrolyte, which may be a solid hydrogel including the functionalized copolymer and the salt dispersed in the functionalized copolymer.

### EXAMPLES

The examples and other implementations described herein are exemplary and not intended to be limiting in describing the full scope of compositions and methods of this disclosure. Equivalent changes, modifications and variations of specific implementations, materials, compositions and methods may be made within the scope of the present disclosure, with substantially similar results.

### Example 1

An exemplary solid, aqueous electrolyte composition was prepared. Particularly, PCL-PEG-PCL based solid, aqueous electrolytes were prepared by synthesizing a PCL-PEG-PCL macromonomer, synthesizing a PCL-PEG-PCL acrylate, and subsequently utilizing the PCL-PEG-PCL acrylate to produce the solid, aqueous electrolyte.

To synthesize the PCL-PEG-PCL macromonomer, the process or reaction illustrated in Scheme 2 was adapted from Xu et al. (Xu, C., Lee, W., Dai, G., and Hong, Y. ACS Appl. Mater. Interfaces 2018, 10, 12, 9969-9979), the contents of which are incorporated herein to the extent consistent with the present disclosure.

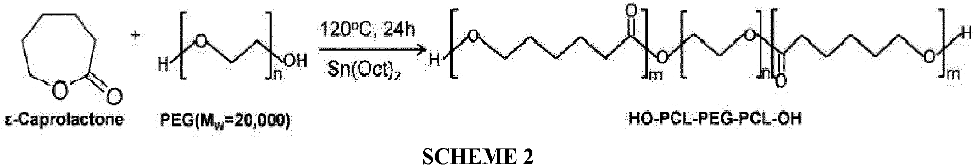

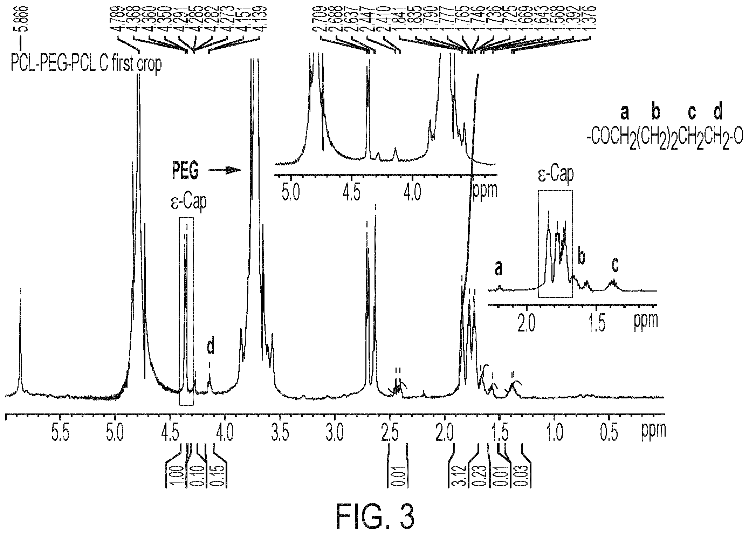

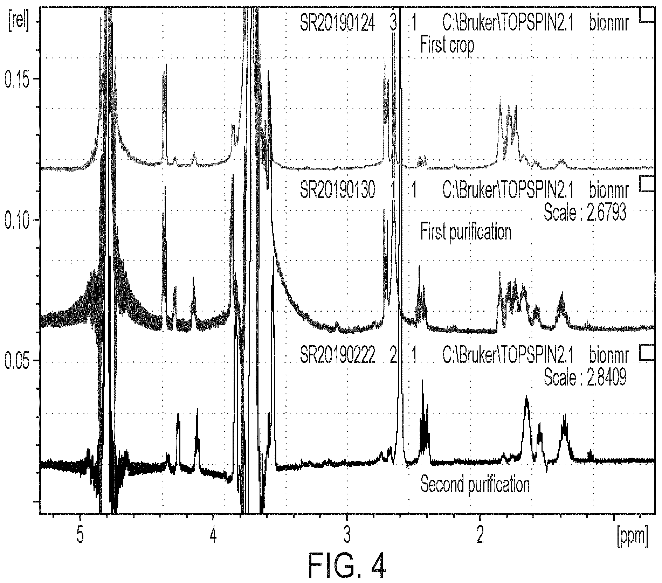

Particularly, about 5 g of ε-caprolactone, about 21.9 g of polyethylene glycol (PEG; MW = 20,000 Da), and about 34.8 mg of a tin 2-ethylhexanoate catalyst were combined, mixed, or otherwise contacted with one another in a round bottom flask and stirred with a magnetic stir bar. The round bottom flask was purged and filled with nitrogen three times, and then heated to about 120°C for about 24 hours (h) under stirring to prepare a reaction mixture. The reaction mixture was cooled to room temperature, dissolved in dichloromethane (CH₂Cl₂), and a crude product was precipitated in cold anhydrous diethyl ether. ¹H NMR of the crude product is illustrated in Figure 3. As illustrated in Figure 3, the crude product synthesized from the initial precipitation of the macromonomer from diethyl ether resulted in the presence of unreacted ε-caprolactone. To remove or separate the unreacted ε-caprolactone, the crude product was dissolved in about 50 mL of dichloromethane at room temperature. About 200 mL of diethyl ether was added dropwise over a minimum period of about 1 hour at room temperature to prepare a suspension. The suspension was stirred at room temperature overnight and filtered through a Büchner funnel. The resulting solid was dried overnight in a vacuum oven maintained at room temperature. The precipitation was repeated until no more peaks attributed to ε-caprolactone were observed in the ¹H NMR spectrum, as illustrated in Figure 4.

The aforementioned process was repeated utilizing varying amounts of polyethylene glycol to thereby synthesize varying macromonomers or macromonomer formulations having varying ratios of polycaprolactone (PCL) to polyethylene glycol (PEG) as summarized in Table 1. The block chain length of each of the respective PCL-PEG-PCL macromonomer formulations were determined using the ¹H NMR spectrum.

**Table 1 - PCL-PEG-PCL Macromonomer Formulations**

| Formulation | PEG (g) | ε-Caprolactone (g) | Calculated block chain length of PCL-PEG-PCL |
|---|---|---|---|
| A | 87.6 | 5 | 93-20000-93 |
| B | 43.8 | 5 | 309-20000-309 |
| C | 21.9 | 5 | 239-20000-239 |

To synthesize the PCL-PEG-PCL acrylate, the process or reaction illustrated in Scheme 3 was adapted from Xu et al. (Xu, C., Lee, W., Dai, G., and Hong, Y. ACS Appl. Mater. Interfaces 2018, 10, 12, 9969-9979), the contents of which are incorporated herein to the extent consistent with the present disclosure.

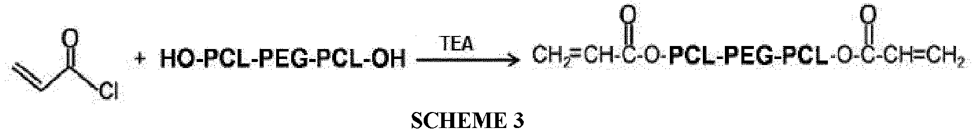

Particularly, about 5 g of the PCL-PEG-PCL macromer was dissolved in about 15 mL of dichloromethane, and about 0.6 mL of triethylamine was added to the mixture under stirring for about 30 minutes under nitrogen in an ice bath. A solution including about 0.33 mL of acryloyl chloride and about 15 mL of dichloromethane was added dropwise to the reaction mixture for over 30 min, thereby resulting in a color change in the solution to yellow. The solution was then heated at about 40°C for about 24 hours under nitrogen. After heating, the reaction mixture was subsequently cooled to room temperature and the product was precipitated by dropwise addition of diethyl ether. The formation of PCL-PEG-PCL acrylate was confirmed by the presence of the vinylic protons in the ¹H NMR spectrum.

To produce the solid, aqueous electrolyte, namely, a PCL-PEG-PCL hydrogel solid aqueous electrolyte, about 400 mg of the PCL-PEG-PCL acrylate (Formulation C of Table 1) and about 2.5 mg of lithium phenyl-2,4,6-trimethylbenzoylphosphinate (LAP) were dissolved in 1 mL of a 4M aqueous solution of ammonium chloride (NH₄Cl/H₂O). It should be appreciated that the molarity of the ammonium chloride may be varied to any concentration of from about 0.5M to about 6M without any changes or modifications in the synthesis/process. The resulting solution was allowed to settle to remove air bubbles, however, nitrogen de-gassing of the solution was not performed. The pH of the solution was between about 3 and 4. The resulting solution was disposed evenly over a 25x75x1 mm glass microscope slide taped over a glass plate. The solution was exposed under a DYMAX^{™} Bluewave 200 (wavelength of about 300 to about 450 nm) for about 10 min to irradiate the solution at about 8 mW/cm² illumination, thereby forming the hydrogel.

The hydrogel was yellow colored and contained ammonium chloride dispersed therein. The hydrogel was also flexible and could be stretched without breaking. Analysis of the hydrogel indicated that it could be dried and rehydrated, and the rehydrated hydrogel maintained flexibility. It was discovered that stable, solid hydrogels were not able to be produced when the PCL-PEG-PCL acrylate were present in an amount/concentration of about 10 weight % or less. Said in another way, it was surprisingly and unexpectedly discovered that the amount of the PCL-PEG-PCL acrylate necessary to prepare stable, solid hydrogels were about 20 weight % or greater.

### Example 2

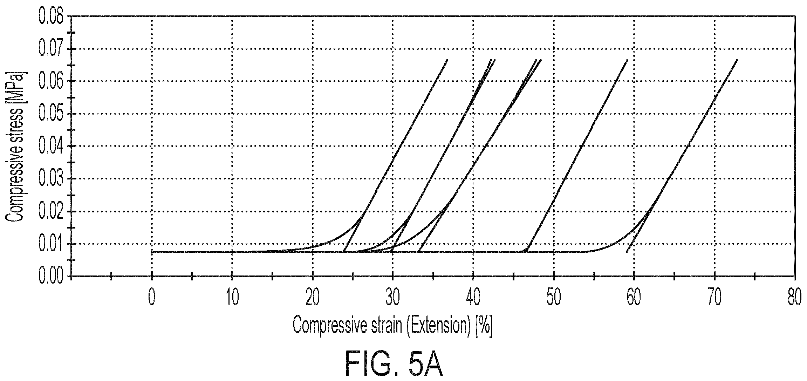

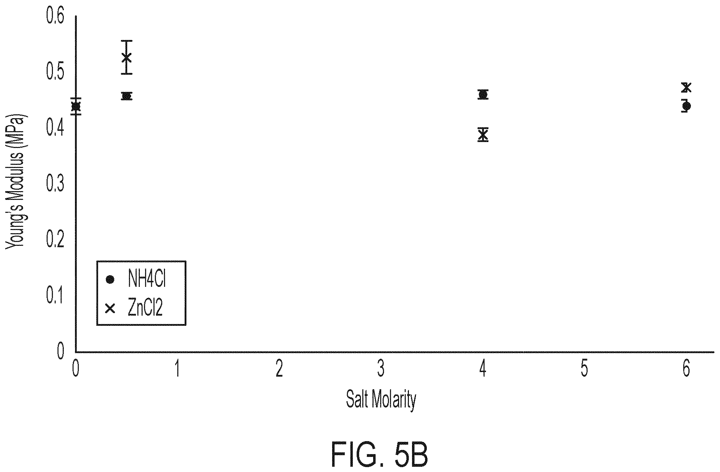

The mechanical properties of the PCL-PEG-PCL hydrogel solid aqueous electrolyte prepared in Example 1 from Formulation C was evaluated. A standard compression test using an INSTRON^{™} 5548 microtester was utilized to provide a stress versus strain curve over five different measurements per sample. The Young's modulus represents the ability of a sample to sustain deformation, which may also be referred to as robustness. The Young's modulus for the five different measurements across the various concentrations of ammonium chloride and zinc chloride are summarized in Figures 5A and 5B. As depicted in Figures 5A and 5B, the hydrogel exhibited a Young's modulus greater than 0.3 MPa, which is sufficient for use as a solid gel polymer electrolyte in a battery. It should be appreciated that the hydrogel exhibits sufficient mechanical properties for use or application as a separator between the electrodes of the battery. The results further demonstrated that salt concentrations of from about 0.5M to about 6M do not have an influence on the mechanical properties of the hydrogel as no significant differences in the measured Young's modulus were observed when varying the salt molarity, as illustrated in Figure 5B.

### Example 3

The electrochemical properties of the PCL-PEG-PCL hydrogel solid aqueous electrolyte prepared in Example 1 from Formulation C was evaluated. Particularly, the electrolyte stability on a surface of metallic zinc was evaluated. Typically, a zinc surface corrodes over time when in contact with aqueous solutions, thereby producing zinc oxides and zinc hydroxides. These zinc oxides and hydroxides migrate into the electrolyte and basify the pH. It should be appreciated that the migration of the oxides and the hydroxides into the electrolyte and the basifying may lead to or result in the precipitation of diamine chlorides or chlorinated zincates from the ammonium chloride or zinc chlorides. These precipitates may saturate the electrolyte and resulted in reduced or loss of conductivity in the solid aqueous electrolyte.

To evaluate the electrolyte stability, the PCL-PEG-PCL hydrogel solid aqueous electrolyte prepared in Example 1 from Formulation C was disposed in direct contact with a zinc surface for one week. After one week, it was observed that the surface of the zinc had corroded to zinc oxide. The zinc oxide formation, however, was minimal. Further, it was surprisingly and unexpectedly discovered that the body of the hydrogel was devoid of any salt precipitates, which indicated that zinc surface passivation occurs and the interface between the zinc surface and the solid electrolyte reached a steady state in which no further corrosion occurred. Accordingly, it was demonstrated that the PCL-PEG-PCL hydrogel solid aqueous electrolyte exhibited sufficient corrosion resistance for use as a polymer electrolyte in a zinc-based battery or system.

### Example 4

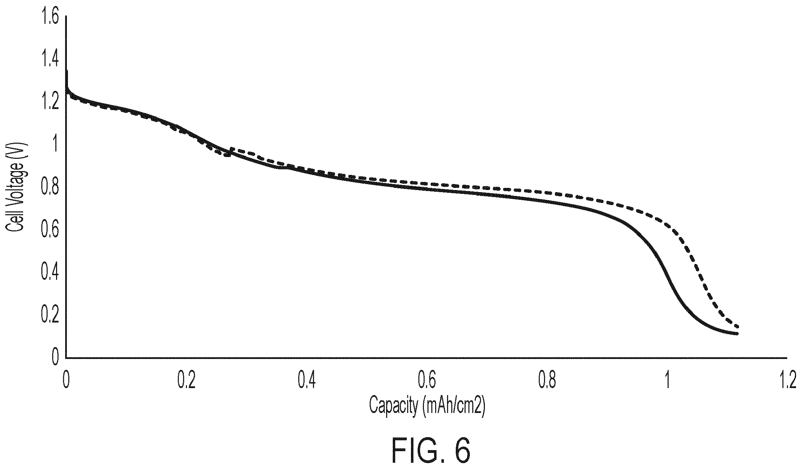

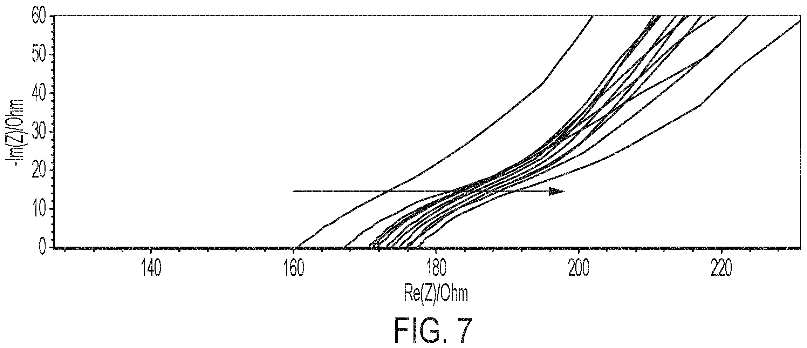

Various batteries were fabricated utilizing the PCL-PEG-PCL hydrogel solid aqueous electrolyte prepared in Example 1 from Formulation C and evaluated. Zinc was utilized as the anode and manganese oxide/carbon was utilized as the cathode. To fabricate the batteries, the PCL-PEG-PCL hydrogel solid aqueous electrolyte was disposed between the anode and the cathode. The PCL-PEG-PCL hydrogel solid aqueous electrolyte was utilized as both a separator and an electrolyte. After a 10 h resting time, the electrochemical performance of the cell was evaluated by continuously discharging the respective battery at 0.01 mA/cm², monitoring the cell voltage during discharge, and measuring the cell capacity at the end of discharge. A representative discharge curve of the batteries is depicted in Figure 6. The associated resistance changes of the batteries at varying stages of discharge is illustrated in Figure 7, which is a Nyquist plot obtained from electrochemical impedance spectroscopy measurements.

As depicted in Figure 6, the cell exhibited a relatively small overpotential of about 100 mV on application of a 0.01 mA/cm² current, and further exhibited a sloping discharge curve that is typical of aqueous MnO₂/Zn cells. As depicted in Figure 7, the frequency response plotted as Re(Z) vs. -Im(Z) indicated only slight changes of the solution resistance over time and very little change associated with the charge transfer resistance, thereby demonstrating the stability of the PCL-PEG-PCL hydrogel solid aqueous electrolyte during discharge. Accordingly, the foregoing demonstrated the electrolyte stability during cell discharge both in and of itself, as well as stability towards both the Zn and MnO₂ electrodes.

### Example 5

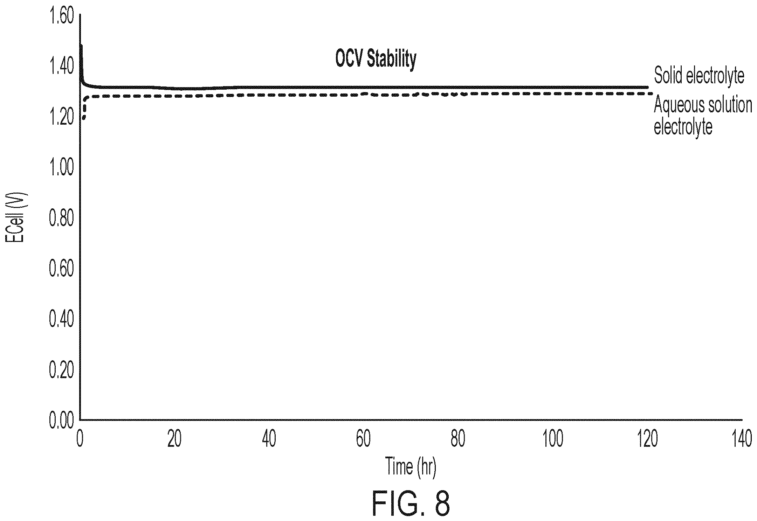

The open circuit voltage (OCV) stability of the battery prepared in Example 4 was evaluated and compared with a cell containing a liquid aqueous solution electrolyte. The solid aqueous cells were fabricated in the same manner as Example 1. For the liquid aqueous electrolyte comparison, the same salt concentration was dissolved in Milli-Q low resistivity water (> 18 MΩ.cm). A glass fiber separator was soaked with this newly prepared electrolyte and placed between the anode and cathode. Both the solid and liquid-based cells were left to sit at room temperature, with the OCV of the cells monitored continuously using a potentiostat/galvanostat over the course of the specified period. The OCV stability of the battery and the cell utilizing the liquid aqueous solution electrolyte is illustrated in Figure 8.

As illustrated in Figure 8, the battery prepared in Example 4 exhibited voltage stability over a period of time of about 120 hours. As further illustrated in Figure 8, the voltage stability of the battery prepared in Example 4 was at least as good as the voltage stability of the cells utilizing the liquid aqueous solution electrolyte.

### Example 6

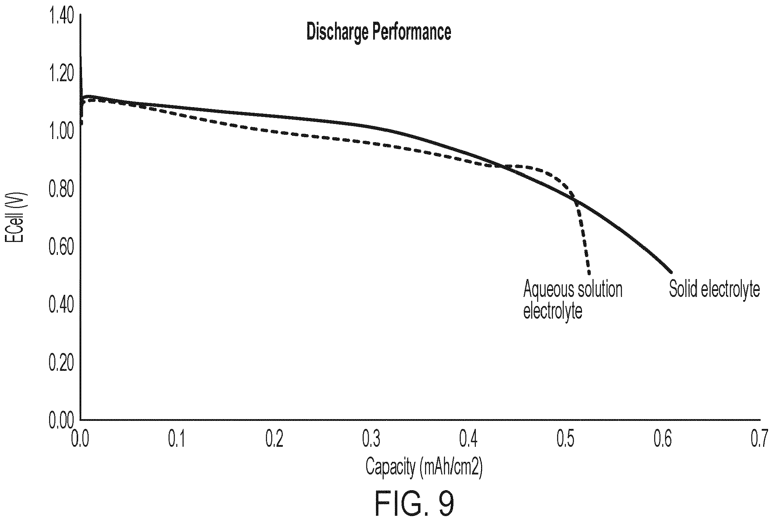

The discharge performance of the batteries prepared in Example 4 were evaluated and compared with a cell containing a liquid aqueous solution electrolyte. Particularly, the capacity (mAh/cm²) was measured versus voltage (V) to compare the discharge performance. The cell was discharged at 0.06 mA/cm² after resting at OCV for 24 hours. Cell discharge was considered complete when the cell voltage reached 0.5 V. The cathode utilized was comprised of MnO₂ active layer deposited on a carbon-based current collector, and the anode utilized was a Zn active layer deposited on a silver-based current collector. The voltage is referenced to the Zn anode. The discharge performance is summarized in Figure 9.

As illustrated in Figure 9, the discharge performance of a MnO₂/Zn electrochemical cell containing the PCL-PEG-PCL-based solid aqueous electrolyte with 4M NH₄Cl was at least as good as the a cell containing a liquid aqueous electrolyte having the same salt at the same concentration.

### Example 7

An exemplary biodegradable electrochemical device, particularly, a biodegradable electrochemical cell, was prepared. To prepare the biodegradable electrochemical device, an anode paste was prepared, a cathode paste was prepared, electrodes of the biodegradable electrochemical device were printed, electrolyte macromonomers were prepared, a curable electrolyte ink was prepared and printed, and the biodegradable electrochemical device was assembled.

To prepare the anode paste, namely, a zinc (Zn) anode paste, an attritor mill fitted with a 75 mL stainless steel attritor was filled with about 150 g of about 3 mm stainless steel shot, about 16.1 g ethylene glycol, about 5.0 g of a styrene-butadiene rubber (SBR) binder commercially available from MTI Corporation of Richmond, CA, about 8.3 g of zinc oxide (ZnO), about 12.2 g of bismuth (III) oxide (Bi₂O₃), and about 78.3 g of Zn dust. The attritor mill was run until the Zn anode paste had a creamy paste consistency. The Zn anode paste was then separated from the shot and transferred to sealed container to prevent evaporation of the ethylene glycol.

To prepare the cathode paste, namely, a manganese dioxide (MnO₂) cathode paste, an attritor fitted with a 75 mL stainless steel attritor was filled with about 150 g of about 3 mm stainless steel shot, about 21 g of ethylene glycol, about 1 g of a styrene-butadiene rubber (SBR) binder, about 30 g of manganese (IV) oxide (MnO₂), and about 7.6 g of graphite. The attritor mill was run until the MnO₂ cathode paste had a creamy paste consistency. The MnO₂ cathode paste was then separated from the shot and transferred to sealed container to prevent evaporation of the ethylene glycol.

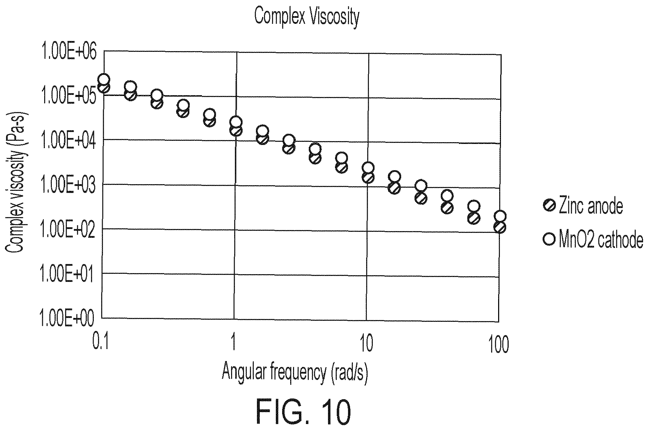

The respective viscosity of the Zn anode paste and the MnO₂ cathode paste was evaluated using a shear sweep method to determine the rheological properties thereof. The respective viscosity of each of the Zn anode paste and the MnO₂ cathode paste is summarized in Figure 10. Both the anode and cathode pastes exhibited non-Newtonian shear thinning behavior consistent with screen printable past inks. It was observed that particle size did not have a significant impact on ink viscosity.

The electrodes of the biodegradable electrochemical device were prepared via printing. Particularly, a silver paste ink (DUPONT^{®} 5025 or a carbon paste ink (CI-2042; NAGASE AMERICA, LLC.) was screen printed onto a PLA-D substrate using a 180 mesh nylon screen with a 80 durometer squeegee to prepare respective current collectors. The screen printed current collectors were then dried in a forced air oven maintained at about 120°C for about 9 min to remove or evaporate the solvents contained in the paste ink and dry the paste ink. The dried current collectors had a thickness of about 6 µm.

A Zn electrode was prepared by depositing a Zn anode layer adjacent a respective current collector with the previously prepared Zn anode paste. Particularly, the Zn anode paste was screen printed onto the current collector using an 80 mesh nylon screen with the 80 durometer squeegee, and subsequently dried in the forced air oven at about 120°C for about 9 min to remove or evaporate the solvents contained in the paste and prepare the Zn electrode. The dried Zn electrode had a thickness of about 40 µm.

A MnO₂ electrode was prepared by depositing a cathode active layer adjacent a respective current collector with the previously prepared MnO₂ cathode paste. Particularly, the MnO₂ cathode paste was screen printed onto the current collector using an 80 mesh nylon screen with the 80 durometer squeegee, and subsequently dried in the forced air oven at about 120°C for about 9 min to remove or evaporate the solvents contained in the paste and prepare the MnO₂ electrode. The dried MnO₂ electrode had a thickness of about 40 µm.

It was observed that screen printing of the MnO₂ and Zn pastes to prepare the electrodes exhibited efficient wetting on the substrate with no evidence of pinholing.

To prepare electrolyte macromonomers, a PCL-PEG-PCL diol and a PCL-PEG20-PCL-diacrylate were prepared.

To prepare the curable electrolyte ink, about 39.4 g of ZnCl₂, about 4.87 g of NH₄Cl, about 80 g of water and about 20 g of ethylene glycol were combined to create an electrolyte solution containing about 2.9 M ZnCl₂, about 0.9 M NH₄Cl, and about 20 wt% ethylene glycol. About 6 g of the electrolyte solution was then combined with about 2 g of the macromonomer and allowed to soak overnight without mixing to facilitate dissolution. About 0.5 g of a stock solution of lithium phenyl(2,4,6-trimethylbenzoyl) phosphinate (LAP) was combined with about 10 g of the electrolyte solution and about 20 drops of BYK-24 silicone defoamer additive, which is commercially available from BYK-CHEMIS GMBH of Wesel, Germany, to prepare the curable electrolyte ink.

An electrolyte layer was prepared by depositing the curable electrolyte ink adjacent the Zn electrode via screen printing. The curable electrolyte ink was screen printed adjacent the Zn electrode using a 60 mesh screen and a 80 durometer squeegee. The curable electrolyte layer was then cured under a 14W, 395 nm LED lamp for about 500 ms to form a gelled electrolyte layer having a thickness of about 15 µm.

Another electrolyte layer was produced similarly by depositing the curable electrolyte ink adjacent the MnO₂ cathode via screen printing. The curable electrolyte ink was screen printed adjacent the MnO₂ cathode using a 60 mesh screen and a 80 durometer squeegee. The curable electrolyte layer was then cured under a 14W, 395 nm LED lamp for about 500 ms to form a gelled electrolyte layer having a thickness of about 15 µm.

To fabricate or assemble the biodegradable electrochemical device, the Zn electrode, including the gelled electrolyte layer, the Zn layer, and the current collector layer, was disposed in a stacked orientation and placed onto the MnO₂ electrode, including the gelled electrolyte layer, the MnO₂ layer, and the current collector layer. The Zn electrode and the MnO₂ electrode were oriented such that the respective electrolyte layer of each of the electrodes were facing each other. A light pressure was applied with a roller to facilitate intimate contact between the respective electrolyte layers of each of the Zn and MnO₂ electrodes and produce an unsealed biodegradable electrochemical device.

The unsealed biodegradable electrochemical device was then disposed between 80 µm sheets of a polyimide film (KAPTON^{®} commercially available from DuPont of Wilmington, DE) to protect the substrate from destructively melting during subsequent sealing steps. A heat sealing device with dies maintained at about 170°C was used to heat seal the edges of the stacked electrodes of the biodegradable electrochemical device. The sealed biodegradable electrochemical device was the removed from the polyimide film and allowed to cool.

### Example 8

The open circuit voltage across exposed tabs of the biodegradable electrochemical device prepared in Example 7 was measured to be 1.46 volts using a digital multimeter.

### Example 9

An exemplary solid, aqueous electrolyte composition including a biodegradable center block was prepared. Particularly, a PVA-PCL based solid, aqueous electrolyte was prepared by synthesizing a PVA-PCL macromonomer.

To synthesize the PVA-PCL macromonomer, the process or reaction illustrated in Scheme 4 was implemented.

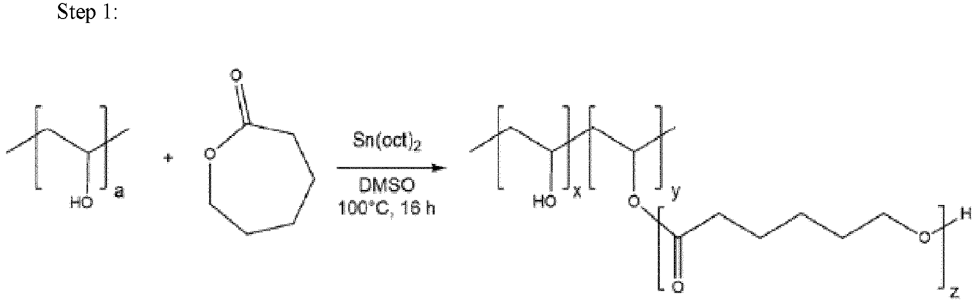

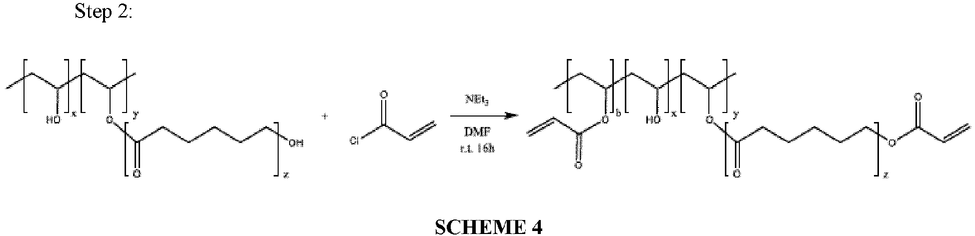

Particularly, about 10 g of poly(vinyl alcohol) (average MW = 3000 g/mol) was disposed in a round bottom flask equipped with a magnetic stirrer and a condenser. The solid was dried under vacuum for about 2 hours. About 20 mL of dimethyl sulfoxide (DMSO) was added and the resulting mixture was heated at about 80°C under stirring until complete solubilization. Once solubilized, the temperature was cooled to about 40°C and about 186 µL of ε-caprolactone and about 175 µL of tin(II) (2-ethyl hexanoate)₂ were added and the reaction mixture was heated at about 100°C for about 24 hours. After heating, the reaction mixture was allowed to cool to about 40°C. About 30 mL of water was added and the resulting free flowing solution was poured in about 500 mL of acetone while stirring to prepare a suspension. The resulting suspension was centrifuged for about 10 min and the resulting pellet was re-dispersed in acetone and centrifuged in the same conditions twice. The resulting solid was dried under vacuum overnight; yielding about 6.7 g of the PVA-PCL block, which was a yellow solid.

About 6.7 g of the PVA-PCL block was combined with about 200 mL of *N,N-*dimethylformamide (DMF) in a round bottom flask equipped with a magnetic stirrer and a condenser, and heated at about 60°C until complete solubilization. An additional aliquot of DMF was added to facilitate the solubilization. The solubilized reaction mixture was then allowed to cool to about 10°C and about 1.94 mL of trimethylamine was added. About 1.94 mL of acryloyl chloride was added dropwise to the reaction mixture and subsequently heated at about 40°C for about 24 hours. The reaction mixture was then poured in to acetone to form a large pellet of product. The pellet was dried under vacuum overnight to thereby yield about 1.6 g of the PVA-PCL acrylate.

### Example 10

Varying biodegradable substrates were evaluated. Particularly, biodegradable biopolyester substrates of Table 2 were extruded into sheets using an extruded equipped with a 20 cm wide flat die. Each of the sheets were then calendered between two rollers. A separate film of a polylactide-based blend was also 3D printed to obtain a different surface quality. Some of the sheets were annealed to enhance crystallization and improve temperature resistance.

The temperature resistance of each of the sheets were evaluated by placing them in an oven on flat metal plates at a temperature of about 120°C or about 150°C. Specifically, each of the sheets were placed on a flat surface in the oven maintained at the specified temperature for about 10 min. After heating, the dimensional stability (e.g., flatness and uniformity) was assessed. To pass the dimensional stability, the respective sheet had to exhibit no deformations. The results of the oven test is summarized in Table 2.

In addition to evaluating the dimensional stability of each of the biodegradable substrates, compatibility and adhesion with the ink was also evaluated. To evaluate the compatibility and adhesion of the ink to each of the substrates, previously prepared carbon- and silver-based inks were screen printed on respective biodegradable substrates and evaluated for adhesion. The dimensional stability was also evaluated after drying at about 120°C. To pass the ink adhesion evaluation, the ink must maintain adhesion to the substrate (1) while flexing at an angle of about 45°; and (2) while wiping a swab across the surface. To pass the dimensional stability after drying at about 120°C, the respective sheet had to exhibit no deformation (e.g., maintain flatness and uniformity) after drying of the ink for 10 min at 120°C. The results are summarized in Table 2.

**Table 2**

| **Dimensional Stability of Varying Biodegradable Substrates** | | | | | |
|---|---|---|---|---|---|
| **Sample ID** | **Sample Description** | **Oven Test** | | **Printing Test** | |
| | | **120°C** | **150°C** | **Ink Adhesion** | **Drying 120°C** |
| PLA-D | PLA modified with nucleating agent D | Pass | Pass | Pass | Pass |
| PLA-E | PLA modified with nucleating agent E | Pass | Pass | Pass | Fail |
| PBS | Polybutylene succinate | Pass | Fail | Pass | Fail |
| PBAT | Polybutylene adipate terephthalate | Fail | Fail | Pass | Fail |
| PLA-P* | Blend of PLA and polyhydroxybutyrate | Pass | Pass | Pass | Fail |
| PDA | Polyhydroxybutyrate-based blend | Pass | Pass | Pass | Pass |

| | | | | | |
|---|---|---|---|---|---|
| *3D printed | | | | | |

As indicated in Table 2, each of the substrates evaluated passed the 120°C oven test with the exception of PBAT, which melted. As further indicated in Table 2, each of the substrates passed the 150°C oven test except for PBAT and PBS. As also indicated in Table 2, most of the substrates exhibited thermal instability during the ink drying process.

### Example 11

Exemplary solid, aqueous electrolyte compositions including a biodegradable center block were prepared. Generally, PVA-graft-PCL based solid, aqueous electrolytes were prepared by synthesizing PVA-graft-PCL polyols, synthesizing reactive PVA-graft-PCL acrylate monomers or macromonomers from the PVA-graft-PCL polyols, and subsequently utilizing the reactive PVA-graft-PCL acrylate macromonomers to produce the solid, aqueous electrolyte compositions. The specific process or reaction for synthesizing the reactive PVA-graft-PCL acrylate macromonomers is illustrated in Scheme 5. As indicated in Scheme 5, the PVA-graft-PCL polyols were prepared, as indicated in Step 1. The PVA-graft-PCL polyols were then utilized to prepare the reactive PVA-graft-PCL acrylate monomers or macromonomers, as indicated in Step 2.

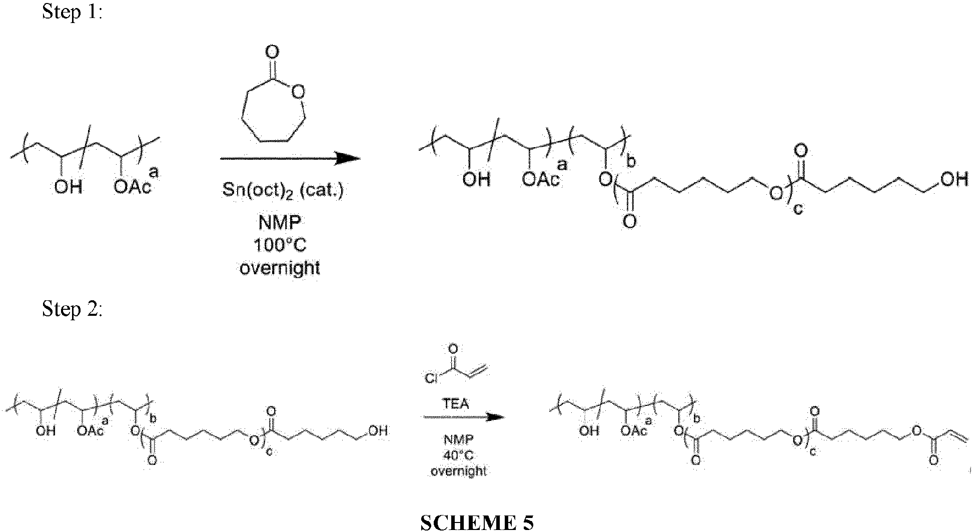

The PVA-graft-PCL polyols were prepared according to the following general procedure. About 10 g of poly(vinyl alcohol) (PVA), commercially available as Poval 5-74 from Sekisui Corp of Secaucus, NJ, having an average MW = 10,000 g/mol, was disposed in a round bottom flask equipped with a magnetic stir bar. The round bottom flask was coupled with a vacuum line and heated with stirring to remove residual water. The round bottom flask was then cooled and dry distilled *N*-Methyl-2-pyrrolidone (NMP) was added and stirred until the PVA was completely dissolved. A catalyst, tin(II) 2-ethylhexanoate (tin(II) octoate), was added to the round bottom flask and the reaction was allowed to stir while heating. Distilled ε-caprolactone in the desired molar ratio was added to the round bottom flask and heated to facilitate the reaction, as indicated in Step 1 of Scheme 5. After reacting the ε-caprolactone (CL) with the PVA, the round bottom flask was cooled to room temperature and the reaction mixture was transferred into a beaker containing stirred 2-propanol to thereby yield a jelly-like precipitate or flocculated solid. The reaction mixture was centrifuged to separate the precipitate. The precipitate was then rinsed with 2-propanol, centrifuged again, and separated from the solvent. The resulting PVA-graft-PCL polyols were dried to provide an off-white solid. The solid was ground into a fine powder.

The aforementioned process was repeated utilizing varying amounts and molar ratios of CL to PVA to thereby synthesize PVA-graft-PCL polyols having varying molar ratios of CL to PVA, as summarized in Table 3. As indicated in Table 3, three molar ratios of CL:PVA were evaluated, namely, 1:1, 0.5:1, and 0.25: 1.

It should be noted that the PVA utilized in the preparation above were about 74% hydrolyzed. As such, the PVA retained some unhydrolyzed acetate functional groups. During the preparation of the PVA-graft-PCL based solid, aqueous electrolytes, it was surprisingly and unexpectedly discovered that the solubility of the PVA was at least partially determined by the degree of hydrolysis of the PVA. Specifically, it was discovered that relatively high degrees of hydrolysis, such as about 80% or greater, resulted in a "folded-up" polymeric PVA chain with fewer exposed hydroxyl groups capable of interacting with water, thereby resulting in a relatively more insoluble PVA. Conversely, it was discovered that relatively low degrees of hydrolysis of the PVA, such as less than 80%, result in a "open" or "unfolded" polymeric PVA chain with more exposed hydroxyl groups capable of interacting with water, thereby resulting in a relatively more soluble PVA.

**Table 3**

| **Dimensional Stability of Varying Biodegradable Substrates** | | | | |
|---|---|---|---|---|
| **Sample** | **Mol. Eq. CL:PVA** | **Degree of Polymerization^{a}** | **PVA:PCL** | **%PCL** |
| 1 | 1:1 | 3.64 | 7.7:1 | 11.5 |
| 2 | 0.5:1 | 2.47 | 15.8:1 | 6 |
| 3 | 0.25:1 | 0.84 | 51.4:1 | 2 |

| | | | | |
|---|---|---|---|---|
| ^{a}: refers to degree of polymerization of grafted caprolactone chain | | | | |

To synthesize the reactive PVA-graft-PCL acrylate monomers or macromonomers, step 2 of Scheme 5 was implemented. Specifically, the reactive PVA-graft-PCL acrylate macromonomers were prepared from the PVA-graft-PCL polyols via an acrylation reaction according to the following general procedure. 12.0 g of PVA-graft-PCL polyol was added to a round bottom flask with a magnetic stir bar. 250 mL of *N*-Methyl-2-pyrrolidone (NMP) was added to the round bottom flask and heated 40 °C with stirring to dissolve the PVA-graft-PCL polyol. After dissolution, about 5 wt% triethylamine (TEA) (0.6 g, 0.83 mL) and about 5 wt% acryloyl chloride (0.6 g, 0.54 mL) were added to the reaction mixture. The round bottom flask was covered with aluminum foil to shield the reaction mixture from radiative energy (i.e., light) and the reaction was heated overnight with stirring. The reaction mixture was then transferred to container with stirred 2-propanol. Contacting the reaction mixture with the 2-propanol produced a precipitate or flocculated white jelly. The precipitate was separated via centrifugation, rinsed with 2-propanol, and centrifuged again. The resulting solid or the reactive PVA-graft-PCL acrylate macromers were transferred to an amber glass jar and stored in a sealed container under refrigeration.

To produce a UV-curable PVA-graft-PCL based electrolyte composition, 10 g of the reactive PVA-graft-PCL acrylate macromonomers (jelly suspension containing 32% solids by weight in 2-propanol, 3.2 g of solid macromonomer) were transferred to an amber glass jar with 12.8 g of an electrolyte solution and mixed. The electrolyte solution was a solution containing 2.89M ZnCl₂ and 0.89M NHaCl. After mixing, the reaction mixture was transferred to a flask with lithium phenyl(2,4,6-trimethylbenzoyl) phosphinate (LAP) photoinitiator (41.6 mg, about 1.0 wt%). The residual 2-propanol was removed via evaporation to furnish a viscous aqueous solution containing 20% by weight of PVA-graft-PCL curable acrylate macromonomer . The resulting mixture was disposed evenly over a glass microscope slide and cured with radiant energy (i.e., UV light) for about 1000 milliseconds to cure the PVA-graft-PCL based electrolyte composition into the PVA-graft-PCL based solid, aqueous electrolyte.

### Example 12

The properties of the PVA-graft-PCL based solid, aqueous electrolyte or hydrogel prepared in Example 11 were evaluated. Specifically, the mechanical properties as well as ionic conductivity of the PVA-graft-PCL based solid, aqueous electrolyte having varying mole ratios of CL to PVA were evaluated. The results are summarized in Table 4.

**Table 4**

| **Properties of PVA-graft-PCL Based Solid, Aqueous Electrolyte** | | | |
|---|---|---|---|
| **Sample** | **Mol. Eq. CL:PVA** | **Young's Modulus (MPa)** | **Conductivity (S/cm)** |
| 1 | 1:1 | 0.12 | 0.075 |
| 2 | 0.5:1 | 0.15 | 0.067 |
| 3 | 0.25:1 | 0.30 | 0.050 |

It was surprisingly and unexpectedly discovered that the elasticity of the materials were significantly greater with mole ratios of CL:PVA less than 1. It was further surprisingly and unexpectedly discovered that the PVA-graft-PCL based solid, aqueous electrolyte prepared with CL:PVA greater than or equal to about 1:1, such as about 1:1, about 1.5:1, and about 2:1 were brittle and did not possess the mechanical properties (e.g., elasticity) necessary for preparing devices. It was also surprisingly and unexpectedly discovered that the PVA-graft-PCL based solid, aqueous electrolyte prepared with CL:PVA less than 0.25: 1 exhibited insufficient grafting of caprolactone onto the PVA polymer. As such, it was surprisingly and unexpectedly discovered that mole ratios of CL to PVA of from about 0.25 to about 0.75 exhibited the ideal level or degree of grafting to provide a rubbery swellable hydrogel having sufficient or ideal elasticity for preparing electrolytes for devices.

The present disclosure has been described with reference to exemplary implementations. Although a limited number of implementations have been shown and described, it will be appreciated by those skilled in the art that changes may be made in these implementations without departing from the principles and spirit of the preceding detailed description. It is intended that the present disclosure be construed as including all such modifications and alterations insofar as they come within the scope of the appended claims or the equivalents thereof.

## Claims

1. An electrolyte composition, comprising a rubber-like hydrogel including a copolymer and a salt, wherein the copolymer comprises at least two polycaprolactone chains attached to a polymeric center block, wherein the polymeric center block comprises polyvinyl alcohol, and wherein the hydrogel is biodegradable.

2. The electrolyte composition of claim 1, wherein the polyvinyl alcohol comprises a degree of hydrolysis of less than about 80%.

3. The electrolyte composition of claim 1, wherein the polyvinyl alcohol comprises a degree of hydrolysis of from about 30% to less than about 80%.

4. The electrolyte composition of claim 1, wherein the polyvinyl alcohol comprises a degree of hydrolysis of from about 60% to less than about 80%.

5. The electrolyte composition of claim 1, wherein the polyvinyl alcohol comprises a degree of hydrolysis of from about 60% to about 75%.

6. The electrolyte composition of claim 1, wherein the polyvinyl alcohol comprises a degree of hydrolysis of about 75%.

7. The electrolyte composition of claim 1, wherein the copolymer comprises a mole ratio of caprolactone to polyvinyl alcohol of from about 0.2: 1 to about 1:1.

8. The electrolyte composition of claim 1, wherein the copolymer comprises a mole ratio of caprolactone to polyvinyl alcohol of from about 0.25:1 to about 0.75:1.

9. The electrolyte composition of claim 1, wherein the copolymer comprises a mole ratio of caprolactone to polyvinyl alcohol of from about 0.3: 1 to about 0.7:1.

10. The electrolyte composition of claim 1, wherein the polyvinyl alcohol comprises a degree of hydrolysis of less than about 80%, and wherein the copolymer comprises a mole ratio of caprolactone to polyvinyl alcohol of from about 0.2:1 to about 1:1.

11. The electrolyte composition of claim 10, wherein the polyvinyl alcohol comprises a degree of hydrolysis of from about 30% to less than 80%.

12. The electrolyte composition of claim 10, wherein the copolymer comprises a mole ratio of caprolactone to polyvinyl alcohol of from about 0.25:1 to about 0.75:1.

13. The electrolyte composition of claim 1, wherein the copolymer comprises caprolactone in an amount of from about 5 wt% to about 20 wt%.

14. The electrolyte composition of claim 1, wherein the copolymer comprises caprolactone in an amount of from about 8 wt% to about 20 wt%.

15. An electrochemical device, comprising:
an anode;
a cathode; and
an electrolyte composition disposed between the anode and the cathode, wherein the electrolyte composition comprises a rubber-like hydrogel including a copolymer and a salt, wherein the copolymer comprises at least two polycaprolactone chains attached to a polymeric center block, wherein the polymeric center block comprises polyvinyl alcohol, and wherein the hydrogel is biodegradable.

16. The electrochemical device of claim 15, wherein the polyvinyl alcohol comprises a degree of hydrolysis of less than about 80%.

17. The electrolyte composition of claim 15, wherein the polyvinyl alcohol comprises a degree of hydrolysis of from about 60% to less than about 80%.

18. The electrolyte composition of claim 15, wherein the copolymer comprises a mole ratio of caprolactone to polyvinyl alcohol of from about 0.2: 1 to about 1:1.

19. The electrolyte composition of claim 15, wherein the copolymer comprises a mole ratio of caprolactone to polyvinyl alcohol of from about 0.25:1 to about 0.75:1.

20. The electrolyte composition of claim 15, wherein the polyvinyl alcohol comprises a degree of hydrolysis of less than about 80%, and wherein the copolymer comprises a mole ratio of caprolactone to polyvinyl alcohol of from about 0.2: 1 to about 1:1.
